(19) Europäisches Patentamt
European Patent Office
Office européen des brevets

(11) **EP 4 492 103 A1**

(12) **EUROPEAN PATENT APPLICATION**
published in accordance with Art. 153(4) EPC

(43) Date of publication:
**15.01.2025 Bulletin 2025/03**

(21) Application number: **23766648.2**

(22) Date of filing: **28.02.2023**

(51) International Patent Classification (IPC):
*G02B 5/26* (2006.01)   *G01J 3/26* (2006.01)
*G01J 3/36* (2006.01)   *G02B 5/28* (2006.01)
*H04N 25/10* (2023.01)

(52) Cooperative Patent Classification (CPC):
G01J 3/26; G01J 3/36; G02B 5/26; G02B 5/28;
H04N 25/10

(86) International application number:
**PCT/JP2023/007415**

(87) International publication number:
**WO 2023/171470 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.03.2022 JP 2022038388**

(71) Applicant: **Panasonic Intellectual Property
Management Co., Ltd.
Kadoma-shi, Osaka 571-0057 (JP)**

(72) Inventors:
• **KOMMA Yoshiaki
  Kadoma-shi, Osaka 571-0057 (JP)**
• **YAKO Motoki
  Kadoma-shi, Osaka 571-0057 (JP)**

(74) Representative: **Grünecker Patent- und
Rechtsanwälte
PartG mbB
Leopoldstraße 4
80802 München (DE)**

(54) **LIGHT DETECTION DEVICE, LIGHT DETECTION SYSTEM, AND FILTER ARRAY**

(57) A light detection device (300) includes a filter array (10) and an image sensor (50). The filter array includes filters including a first filter and a second filter. The image sensor includes pixels and detects light transmitted through the filter array. A first transmission spectrum of the first filter having local maxima differs from a second transmission spectrum of the second filter having local maxima. The filters are arranged in a matrix pattern along a first direction and a second direction crossing each other. The pixels are arranged in a matrix pattern along a third direction and a fourth direction crossing each other. At least one of Rp1 and Rp2 differs from 1. The Rp1 is a quotient obtained by dividing a pitch of the filters in the first direction by a pitch of the pixels in the third direction. The Rp2 is a quotient obtained by dividing a pitch of the filters in the second direction by a pitch of the pixels in the fourth direction.

FIG. 11

## Description

Technical Field

The present disclosure relates to a light detection device, a light detection system, and a filter array.

Background Art

Detailed properties of an object that have been difficult to determine with an RGB image according to the related art can be determined by utilizing spectral information of many bands, for example, several tens of bands, each of which is a narrow band. A camera that acquires such multi-wavelength information is referred to as a "hyperspectral camera". Hyperspectral cameras are used in various fields including food inspection, biopsy, drug development, and mineral component analysis.

PTL 1 discloses an example of a hyperspectral imaging device using compressed sensing. The imaging device includes a coding element, which is an array of optical filters having light transmittances with different wavelength dependences; an imaging element, or a so-called image sensor, that detects light transmitted through the coding element; and a signal processing circuit. The coding element is disposed in an optical path connecting a subject and the image sensor. The image sensor includes pixels, each of which simultaneously detects light in which components of multiple wavelength bands are superposed, thereby acquiring a single wavelength-multiplexed image. The signal processing circuit generates image data for each wavelength band by applying compressed sensing to the acquired wavelength-multiplexed image using spatial distribution information of the spectral transmittance of the coding element. In the imaging device disclosed in PTL 1, an optical filter array having two or more transmittance peaks (that is, local maxima) within a target wavelength band is used as the coding element.

PTL 2 discloses an example of a filter array including a Fabry-Perot resonator including a dielectric multilayer film as a reflection layer. PTLs 3 to 5 disclose examples of arrangements of a filter array and an image sensor. PTLs 6 to 9 disclose examples of filter arrays and image sensors for an electronic camera according to the related art that acquires an RGB image.

Citation List

Patent Literature

PTL 1: Japanese Unexamined Patent Application Publication No. 2016-156801
PTL 2: U.S. Patent No. 9,466,628
PTL 3: Japanese Unexamined Patent Application Publication (Translation of PCT Application) No. 2013 -512445
PTL 4: Japanese Unexamined Patent Application Publication No. 63-151076
PTL 5: Japanese Unexamined Patent Application Publication No. 59-218770
PTL 6: Japanese Unexamined Patent Application Publication (Translation of PCT Application) No. 2018 -529297
PTL 7: Japanese Unexamined Patent Application Publication No. 56-123185
PTL 8: Japanese Examined Utility Model Registration Application Publication No. 55-165562
PTL 9: International Publication No. 2010/079557

Summary of Invention

The present disclosure provides a light detection device and a light detection system with high productivity and good imaging characteristics, and also provides a filter array as a component of the light detection device and the light detection system.

A light detection device according to an aspect of the present disclosure includes a filter array including filters and an image sensor including pixels, the image sensor detecting light transmitted through the filter array. The filters include a first filter and a second filter. A first transmission spectrum of the first filter differs from a second transmission spectrum of the second filter. The first transmission spectrum has local maxima. The second transmission spectrum has local maxima. The filters are arranged in a matrix pattern along a first direction and a second direction crossing each other. The pixels are arranged in a matrix pattern along a third direction and a fourth direction crossing each other. Rp1 is a quotient obtained by dividing a pitch of the filters in the first direction by a pitch of the pixels in the third direction. Rp2 is a quotient obtained by dividing a pitch of the filters in the second direction by a pitch of the pixels in the fourth direction. At least one of the Rp1 and the Rp2 differs from 1.

Generic or specific aspects of the present disclosure may be implemented as any combination of a system, a device, a method, an integrated circuit, a computer program, and a recording medium. Examples of a computer-readable recording medium include non-volatile recording media, such as a compact disc-read only memory (CD-ROM). The device may be composed of one or more devices. When the device is composed of two or more devices, the two or more devices may be disposed in a single piece of equipment or be disposed separately in two or more separate pieces of equipment. In the specification and claims herein, the term "device" may mean not only a single device but also a system composed of devices.

The technology of the present disclosure provides a light detection device and a light detection system with high productivity and good imaging characteristics, and also provides a filter array as a component of the light detection device and the light detection system.

Brief Description of Drawings

[Fig. 1] Fig. 1 is a schematic diagram illustrating an example of a light detection system according to an embodiment of the present disclosure.

[Fig. 2A] Fig. 2A is a schematic diagram illustrating an example of a filter array according to an embodiment of the present disclosure.

[Fig. 2B] Fig. 2B illustrates examples of spatial distributions of light transmittance for respective wavelength bands included in a target wavelength band.

[Fig. 2C] Fig. 2C illustrates an example of the transmission spectrum of a filter included in the filter array illustrated in Fig. 2A.

[Fig. 2D] Fig. 2D illustrates an example of the transmission spectrum of another filter included in the filter array illustrated in Fig. 2A.

[Fig. 3A] Fig. 3A illustrates an example of the relationship between the target wavelength band and wavelength bands included in the wavelength band.

[Fig. 3B] Fig. 3B illustrates another example of the relationship between the target wavelength band and wavelength bands included in the wavelength band.

[Fig. 4A] Fig. 4A illustrates the transmission spectral characteristics of a filter included in the filter array.

[Fig. 4B] Fig. 4B illustrates the result of averaging the transmission spectrum illustrated in Fig. 4A in each wavelength band.

[Fig. 5] Fig. 5 is a schematic sectional view illustrating an example of the structure of a filter array according to an embodiment of the present disclosure.

[Fig. 6] Fig. 6 is a schematic sectional view illustrating an example of a light detection device according to an embodiment of the present disclosure.

[Fig. 7] Fig. 7 is a graph showing the transmission spectrum of a structure including two media having the same refractive index and an air gap layer positioned between the media.

[Fig. 8] Fig. 8 is a schematic sectional view illustrating another example of the light detection device.

[Fig. 9] Fig. 9 is a schematic plan view illustrating a light detection device according to a comparative example.

[Fig. 10] Fig. 10 illustrates the relationship between the misalignment between a filter array and an image sensor and the reconstruction error of separated images according to a comparative example.

[Fig. 11] Fig. 11 is a schematic plan view illustrating an example of a light detection device according to the present embodiment.

[Fig. 12] Fig. 12 illustrates the relationship between the misalignment between a filter array and an image sensor and the reconstruction error of separated images according to the present embodiment.

[Fig. 13] Fig. 13 illustrates the relationship between the ratio of the filter pitch to the pixel pitch and the reconstruction error of separated images according to the present embodiment when the misalignment is 0.5.

[Fig. 14] Fig. 14 illustrates the relationship between the ratio of the filter pitch to the pixel pitch, the misalignment, and the reconstruction error of separated images 220 according to the present embodiment.

[Fig. 15] Fig. 15 illustrates the relationship between the ratio of the filter pitch to the pixel pitch and the maximum reconstruction error of separated images according to the present embodiment.

[Fig. 16A] Fig. 16A is a schematic sectional view illustrating another example of a light detection device.

[Fig. 16B] Fig. 16B is a plan view of the light detection device illustrated in Fig. 16A from which a filter array and a substrate are removed.

[Fig. 16C] Fig. 16C is a schematic plan view illustrating another example of the arrangement of double-sided tape illustrated in Fig. 16B.

[Fig. 16D] Fig. 16D is a schematic plan view illustrating an example in which spacers and adhesive parts are arranged instead of the double-sided tape 30 illustrated in Fig. 16B.

[Fig. 17] Fig. 17 illustrates an example of a first filter distance of a filter array 10 in a first direction and an example of a second filter distance of the filter array 10 in a second direction.

[Fig. 18] Fig. 18 illustrates an example of a first pixel distance of an image sensor 50 in a third direction and an example of a second pixel distance of the image sensor 50 in a fourth direction.

Description of Embodiments

In the present disclosure, all or some of the circuits, units, devices, or members or all or some of the functional blocks in block diagrams may, for example, be implemented as one or more electronic circuits including a semiconductor device, a semiconductor integrated circuit (IC), or a large-scale integration (LSI) circuit. The LSI circuit or IC may be integrated on a single chip or formed by combining chips together. For example, functional blocks other than storage devices may be integrated in a single chip. Although the term "LSI" or "IC" is used herein, the name differs depending on the degree of integration, and "system LSI", "very large-scale integration (VLSI)", or "ultra-large-scale integration (ULSI)" may be used instead. A field-programmable gate array (FPGA) programmed after the fabrication of an LSI circuit, or a reconfigurable logic device that allows the reconfiguration of connection relationships inside the LSI circuit or the set-up of circuit partitions inside the LSI circuit may also be used for the same purposes.

Furthermore, all or some of the functions or operations of the circuits, units, devices, or members may be executed by a software process. In this case, the software is recorded on one or more non-transitory recording media, such as a ROM, an optical disc, or a hard disk drive. When the software is executed by a processor, the function specified by the software is executed by the processor and peripheral devices. A system or a device may include one or more non-transitory recording media on which the software is recorded, the processor, and a necessary hardware device, such as an interface.

Exemplary embodiments of the present disclosure will now be described. The embodiments described below are generic or specific examples. Numerical values, shapes, components, and arrangements of the components described in the embodiments are examples and are not intended to limit the present disclosure. In addition, among the components of the embodiments described below, components that are not described in the independent claims indicating the broadest concept are described as optional components. Also, the diagrams are schematic, and are not necessarily strictly accurate. Furthermore, in the drawings, substantially the same components are denoted by the same reference signs, and redundant description may be omitted or simplified.

Before describing the embodiments of the present disclosure, the underlying knowledge forming the basis of the present disclosure will be described. PTL 1 discloses an imaging device capable of producing a high-resolution image for each of the wavelength bands included in a target wavelength band. In the imaging device, an image of light from an object is captured after being coded by an optical element called a "coding element". The coding element includes, for example, regions arranged along a two-dimensional plane. At least two of these regions each have a transmission spectrum including a local maximum of the transmittance at each of at least two of the wavelength bands included in a wavelength band of an imaging target. The coding element may be disposed directly on an image sensor including pixels. As described in paragraph [0073] of PTL 1, each of the regions included in the coding element corresponds to or faces one of the pixels included in the image sensor. In other words, the regions included in the coding element correspond to or face the pixels included in the image sensor in one-to-one correspondence.

The pixel data acquired by imaging using the coding element includes information of the wavelength bands. In other words, the image data is compressed image data in which wavelength information is compressed. Therefore, the amount of data to be held can be reduced. For example, even when the recording medium has a limited capacity, data of a long-duration video can be acquired. Multi-wavelength images are produced by reconstructing images corresponding to respective ones of the wavelength bands from the compressed image acquired by the image process.

The coding element may be provided as, for example, a filter array including filters arranged two-dimensionally. Each of the filters may have the structure of, for example, a so-called Fabry-Perot resonator including an interference layer. The structure disclosed in PTL 2, for example, may be used as the Fabry-Perot resonator. The filters may be designed as follows. That is, the transmission spectrum of each filter includes a local maximum in each of at least two of the wavelength bands included in the wavelength band of the imaging target. Filters having interference layers with different thicknesses have different transmission spectra.

Light transmitted through the filter array is detected by the image sensor. In the structure disclosed in PTL 3, the filter array is integrated on the image sensor. With this structure, a change in the structure of the filter array requires a change in the manufacturing process, resulting in increased cost.

In the structures disclosed in PTL 4 and PTL 5, the filter array and the image sensor are produced individually and bonded together. In such a structure, the structure of the filter array can be changed independently. The structure of the filter array can be changed without changing the manufacturing process, and the manufacturing cost can be reduced.

However, in practice, when the filter array and the image sensor are bonded together, a misalignment on the order of micrometers inevitably occurs therebetween. Also when the filter array is integrated on the image sensor, a misalignment may occur between the filter array and the image sensor, although the amount thereof is less than that in the case of bonding. However, none of PTLs 1 to 5 discusses the misalignment between the filter array and the image sensor.

The inventors have found a problem that the misalignment between the filter array and the image sensor causes a reduction in the accuracy of the multi-wavelength images and arrived at a light detection device capable of solving the problem. As described in detail below, in a light detection device according to an embodiment of the present disclosure, the arrangement cycle, or pitch, of the filters included in the filter array differs from the pitch of the pixels included in the image sensor. According to this structure, the reduction in the accuracy of the multi-wavelength images can be suppressed even when there is a misalignment between the filter array and the image sensor. A light detection device, a light detection system, and a filter array according to embodiments of the present disclosure will be described below.

A light detection device according to a first item includes a filter array including filters and an image sensor including pixels, the image sensor detecting light transmitted through the filter array. The filters include a first filter and a second filter. A first transmission spectrum of the first filter differs from a second transmission spectrum of the second filter. The first transmission spectrum has local maxima. The second transmission spectrum has local maxima. The filters are arranged in a matrix pattern along a first direction and a second direction crossing each other. The pixels are arranged in a matrix pattern along a third direction and a fourth direction crossing each other. Rp1 is a quotient obtained by dividing a pitch of the filters in the first direction by a pitch of the pixels in the third direction. Rp2 is a quotient obtained by dividing a pitch of the filters in the second direction by a pitch of the pixels in the fourth direction. At least one of the Rp1 and the Rp2 differs from 1.

This light detection device has high productivity and good imaging characteristics.

A light detection device according to a second item is the light detection device according to the first item in which the Rp1 and the Rp2 both differ from 1.

This light detection device has higher productivity and better imaging characteristics.

A light detection device according to a third item is the light detection device according to the second item in which the Rp1 and the Rp2 are equal to each other.

According to this light detection device, the filter array can be easily designed.

A light detection device according to a fourth item is the light detection device according to any one of the first to third items in which, in plan view, an effective region of the filter array includes a first portion that overlaps an entirety of an effective region of the image sensor and a second portion that does not overlap the effective region of the image sensor.

According to this light detection device, the image sensor can detect light transmitted through the filter array over the entirety of the effective region thereof.

A light detection device according to a fifth item is the light detection device according to the fourth item in which a size of the effective region of the filter array in the first direction exceeds a size of the effective region of the image sensor in the third direction by greater than or equal to 10 $\mu$m, and in which a size of the effective region of the filter array in the second direction exceeds a size of the effective region of the image sensor in the fourth direction by greater than or equal to 10 $\mu$m.

According to this light detection device, even when there is a misalignment of less than or equal to 5 $\mu$m in the first direction and/or the second direction, the effective region of the filter array can include the first portion that overlaps the entirety of the effective region of the image sensor in plan view.

A light detection device according to a sixth item is the light detection device according to the fourth or fifth item in which a size of the effective region of the filter array in the first direction exceeds a size of the effective region of the image sensor in the third direction by greater than or equal to twice the pitch of the filters in the first direction, and in which a size of the effective region of the filter array in the second direction exceeds a size of the effective region of the image sensor in the fourth direction by greater than or equal to twice the pitch of the filters in the first direction.

According to this light detection device, even when there is a misalignment of less than or equal to the pitch of the filters in the first direction and/or the second direction, the effective region of the filter array can include the first portion that overlaps the entirety of the effective region of the image sensor in plan view.

A light detection device according to a seventh item is the light detection device according to any one of the first to sixth items in which at least one of the Rp1 and the Rp2 is less than or equal to 0.998 or greater than or equal to 1.002.

According to this light detection device, a reduction in the accuracy of the multi-wavelength images can be suppressed.

A light detection device according to an eighth item is the light detection device according to the seventh item in which at least one of the Rp1 and the Rp2 is less than or equal to 0.99 or greater than or equal to 1.01.

According to this light detection device, a reduction in the accuracy of the multi-wavelength images can be suppressed, and the accuracy of the multi-wavelength images can be stabilized.

A light detection device according to a ninth item is the light detection device according to the seventh or eighth item in which at least one of the Rp1 and the Rp2 is less than or equal to 1.5.

According to this light detection device, a significant reduction in the accuracy of the multi-wavelength images can be suppressed.

A light detection device according to a tenth item is the light detection device according to the ninth item in which at least one of the Rp1 and the Rp2 is less than 1.

According to this light detection device, a reduction in the accuracy of the multi-wavelength images can be further suppressed compared to when at least one of Rp1 and Rp2 is greater than 1.

A light detection device according to an eleventh item is the light detection device according to any one of the seventh to tenth items in which at least one of the Rp1 and the Rp2 is greater than or equal to 0.55.

According to this light detection device, a significant reduction in the accuracy of the multi-wavelength images can be suppressed.

A light detection device according to a twelfth item is the light detection device according to any one of the first to eleventh items in which the filter array includes a light incident surface and an uneven surface positioned opposite to the light incident surface, and in which the uneven surface faces a light detection surface of the image sensor.

According to this light detection device, the appearance of interference fringes due to interference of light on the image acquired by the image sensor can be reduced.

A light detection device according to a thirteenth item is the light detection device according to the twelfth item in which, when a target wavelength band for imaging is greater than or equal to λ1 and less than or equal to λ2, a minimum distance between the uneven surface and the light detection surface is greater than λ2/4.

According to this light detection device, the imaging characteristics in the target wavelength band can be improved.

A light detection device according to a fourteenth item is the light detection device according to the twelfth or thirteenth item further including spacers disposed between a peripheral region of the filter array and a peripheral region of the image sensor. At least a portion of the peripheral region of the filter array and at least a portion of the peripheral region of the image sensor are bonded to each other with adhesive parts.

According to this light detection device, the filter array and the image sensor can be joined together while being further parallel to each other.

A light detection system according to a fifteenth item includes the light detection device according to any one of the first to fourteenth items and a processing circuit. The processing circuit reconstructs spectral images corresponding to respective ones of four or more wavelength bands from an image acquired by the image sensor.

According to this light detection system, the spectral images can be reconstructed.

A filter array according to a sixteenth item is a filter array for an image sensor including pixels. The filter array includes filters. The filters include a first filter and a second filter. A first transmission spectrum of the first filter differs from a second transmission spectrum of the second filter. The first transmission spectrum has local maxima. The second transmission spectrum has local maxima. The filters are arranged in a matrix pattern along a first direction and a second direction crossing each other. The pixels are arranged in a matrix pattern along a third direction and a fourth direction crossing each other. Rp1 is a quotient obtained by dividing a pitch of the filters in the first direction by a pitch of the pixels in the third direction. Rp2 is a quotient obtained by dividing a pitch of the filters in the second direction by a pitch of the pixels in the fourth direction. At least one of the Rp1 and the Rp2 differs from 1.

According to this filter array, a light detection device with high productivity and good imaging characteristics can be obtained.

A light detection device according to a seventeenth item includes a filter array including filters and an image sensor including pixels, the image sensor detecting light transmitted through the filter array. The filters include first filters and second filters. Each of the first filters has a first transmission spectrum. Each of the second filters has a second transmission spectrum. The first transmission spectrum differs from the second transmission spectrum. The first filters are arranged irregularly in the filter array. The second filters are arranged irregularly in the filter array. The filters are arranged in a matrix pattern along a first direction and a second direction crossing each other. The pixels are arranged in a matrix pattern along a third direction and a fourth direction crossing each other. Rp1 is a quotient obtained by dividing a pitch of the filters in the first direction by a pitch of the pixels in the third direction. Rp2 is a quotient obtained by dividing a pitch of the filters in the second direction by a pitch of the pixels in the fourth direction. At least one of the Rp1 and the Rp2 differs from 1.

This light detection device has high productivity and good imaging characteristics.

A light detection device according to an eighteenth item is the light detection device according to any one of the first to fourteenth items in which the image sensor generates an image signal based on light transmitted through the filter array and transmits the image signal to a processing device that reconstructs spectral images corresponding to respective ones of four or more wavelength bands by compressed sensing.

According to this light detection device, the image signal for the reconstruction of the spectral images can be generated and output by the image sensor.

A light detection device according to a nineteenth item includes a filter array including filters and an image sensor including pixels, the image sensor detecting light transmitted through the filter array. The filters include multiple types of filters having different transmission spectra. The filters are arranged in a matrix pattern along a first direction and a second direction crossing each other. The pixels are arranged in a matrix pattern along a third direction and a fourth direction crossing each other. An angle between the third direction and the first direction is greater than or equal to 0° and less than or equal to 45°. An angle between the fourth direction and the second direction is greater than or equal to 0° and less than or equal to 45°. Rp1 is a quotient obtained by dividing a pitch of the filters in the first direction by a pitch of the pixels in the third direction. Rp2 is a quotient obtained by dividing a pitch of the filters in the second direction by a pitch of the pixels in the fourth direction. At least one of the Rp1 and the Rp2 differs from 1.

This light detection device has high productivity and good imaging characteristics.

A light detection device according to a twentieth item is the light detection device according to the first item in which an angle between the third direction and the first direction is greater than or equal to 0° and less than or equal to 45°, and an angle between the fourth direction and the second direction is greater than or equal to 0° and less than or equal to 45°.

A filter array according to a twenty-first item is the filter array according to the sixteenth item in which an angle between the third direction and the first direction is greater than or equal to 0° and less than or equal to 45°, and an angle between the fourth direction and the second direction is greater than or equal to 0° and less than or equal to 45°.

A light detection device according to a twenty-second item is the light detection device according to the seventeenth item in which an angle between the third direction and the first direction is greater than or equal to 0° and less than or equal to 45°, and an angle between the fourth direction and the second direction is greater than or equal to 0° and less than or equal to 45°.

(Embodiments)

In the following description, first, a light detection system according to the present embodiment, components thereof, and a method for reconstructing multi-wavelength images will be described. The light detection system according to the present embodiment includes a filter array, an image sensor, and a signal processing circuit. Next, the influence of misalignment between a filter array and an image sensor on the multi-wavelength images according to a comparative example will be described. Also, a method for suppressing the influence in the present embodiment will be described. Lastly, a method for fixing the arrangement of the filter array and the image sensor will be described.

<Light Detection System>

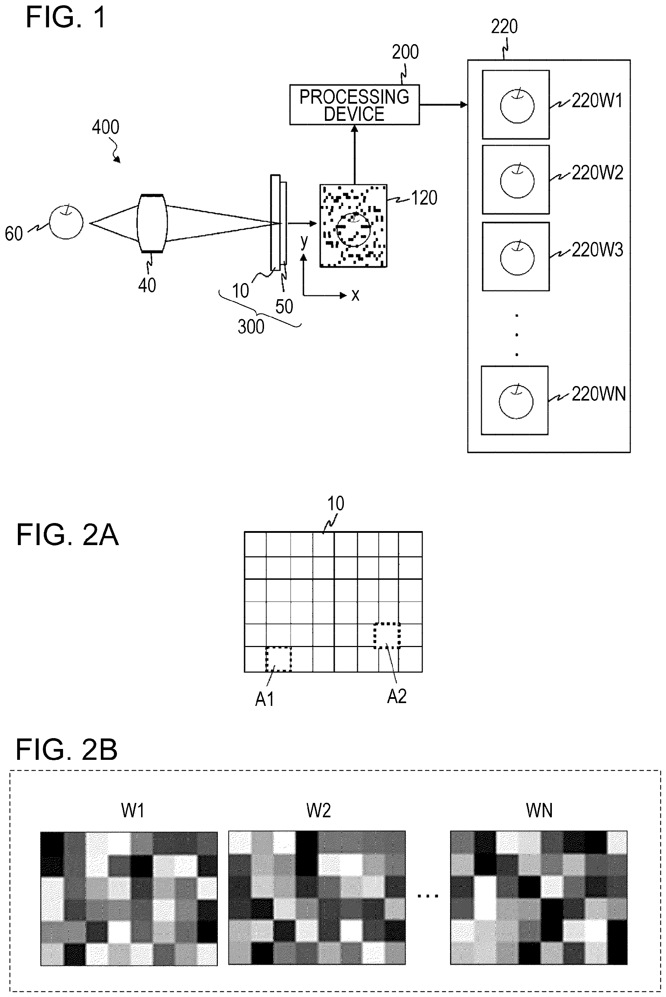

Fig. 1 is a schematic diagram illustrating an example of a light detection system according to an embodiment of the present disclosure. A light detection system 400 illustrated in Fig. 1 includes an optical system 40, a filter array 10, an image sensor 50, and a signal processing circuit 200. The filter array 10 has a function similar to that of a "coding element" disclosed in PTL 1. Therefore, the filter array 10 may also be referred to as a "coding element". The optical system 40 and the filter array 10 are disposed in an optical path of light from an object 60. In the example illustrated in Fig. 1, the filter array 10 is disposed between the optical system 40 and the image sensor 50 and at a short distance from the image sensor 50. The specific value of the short distance will be described below. In this specification, a device including the filter array 10 and the image sensor 50 is referred to as a "light detection device 300".

Fig. 1 illustrates an apple as an example of the object 60. The object 60 is not limited to an apple, and may be any object. The signal processing circuit 200 uses image data generated by image sensor 50 to generate image data for each of the wavelength bands included in a specific wavelength band (hereinafter also referred to as a "target wavelength band"). This image data is referred to as "spectral image data" in this specification. Here, assume that the number of wavelength bands included in the target wavelength band is N (N is an integer greater than or equal to 4). In the following description, the generated spectral image data for the wavelength bands are referred to as a separated image 220W1, a separated image 220W2, ..., and a separated image 220WN, and are collectively referred to as separated images 220. The target wavelength band may include a wavelength band W1, a wavelength band W2, ..., and a wavelength band WN. The separated image 220W1 may correspond to the wavelength band W1, the separated image 220W2 to the wavelength band W2, ..., and the separated image 220WN to the wavelength band WN.

In this specification, a signal representing an image, that is, a collection of signals representing pixel values of pixels that constitute the image, is also referred to simply as an "image". The target wavelength band for imaging may be set to any wavelength band. The target wavelength band is not limited to a wavelength band of visual light, and may be included in a wavelength range of ultraviolet, near-infrared, mid-infrared, or far-infrared rays or microwaves.

The filter array 10 includes light-transmissive filters arranged along a two-dimensional plane. More specifically, the filters are arranged in a matrix pattern. The filter array 10 is an optical element in which the filters have different light transmission spectra, that is, light transmittances with different wavelength dependencies. The filter array 10 modulates the intensity of incident light for each wavelength band when the light passes therethrough.

The optical system 40 includes at least one lens. Although the optical system 40 is composed of a single lens in the example illustrated in Fig. 1, the optical system 40 may be a combination of lenses. The optical system 40 forms an image on a light detection surface of the image sensor 50 through the filter array 10.

The image sensor 50 includes light-detecting elements arranged two-dimensionally, and detects light transmitted through the filter array 10. The light-detecting elements may be arranged in, for example, a matrix pattern. The image sensor 50 may be, for example, a charge-coupled device (CCD) sensor, a complementary metal-oxide-semiconductor (CMOS) sensor, or an infrared array sensor. The light-detecting element may include, for example, a photodiode.

Each of the light-detecting elements is at least sensitive to light in the target wavelength band. More specifically, each of the light-detecting elements substantially has a sensitivity necessary to detect light in the target wavelength band. For example, the light-detecting elements may have an external quantum efficiency of greater than or equal to 1% in the wavelength band. The light-detecting elements may have an external quantum efficiency of greater than or equal to 10%. The light-detecting elements may have an external quantum efficiency of greater than or equal to 20%. In the following description, the light-detecting elements are also referred to as pixels.

The signal processing circuit 200 may be, for example, an integrated circuit including a processor and a storage medium, such as a memory. The signal processing circuit 200 generates data of the separated images 220 corresponding to the respective wavelength bands based on an image 120, which is a compressed image acquired by the image sensor 50. The separated images 220 and the method by which the signal processing circuit 200 processes an image signal will be described in detail below. The signal processing circuit 200 may be installed in the light detection device 300 or be a component of a signal processing device electrically connected to the light detection device 300 with or without a wire.

<Filter Array>

The filter array 10 according to the present embodiment will now be described. The filter array 10 is disposed in an optical path of light from the object, and modulates the intensity of the incident light for each wavelength. This process performed by the filter array, or the coding element, is referred to as "coding" in this specification.

Fig. 2A is a schematic diagram illustrating an example of the filter array 10 according to the present embodiment. The filter array 10 illustrated in Fig. 2A includes filters arranged two-dimensionally. Each filter has an individually set transmission spectrum. The transmission spectrum is expressed by a function $T(\lambda)$, where $\lambda$ is the wavelength of the incident light. The transmission spectrum $T(\lambda)$ may take a value of greater than or equal to 0 and less than or equal to 1.

In the example illustrated in Fig. 2A, the filter array 10 includes 48 rectangular filters arranged in 6 rows and 8 columns. This is merely an example, and more filters may be provided in practice. As described below, the number of filters is preferably greater than the number of pixels in the image sensor 50. The number of filters included in the filter array 10 may be determined in the range of, for example, several tens to tens of millions depending on the application.

Fig. 2B illustrates examples of spatial distributions of light transmittance for the respective wavelength bands W1, W2, ..., and WN included in the target wavelength band. In the example illustrated in Fig. 2B, differences in the tone between the filters show differences in the transmittance. The lighter filters have higher transmittances, and the darker filters have lower transmittances. As illustrated in Fig. 2B, the spatial distribution of light transmittance differs for each wavelength band.

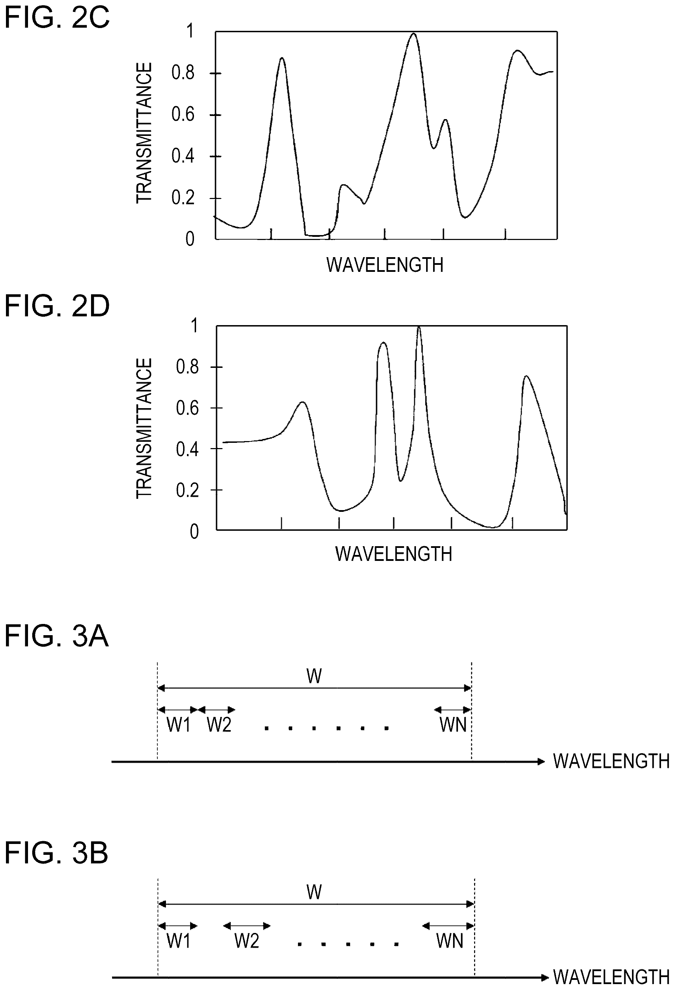

Figs. 2C and 2D illustrate examples of transmission spectra of filters A1 and A2, respectively, among the filters included in the filter array 10 illustrated in Fig. 2A. The transmission spectrum of the filter A1 and the transmission spectrum of the filter A2 differ from each other. Thus, the transmission spectrum of the filter array 10 differs for each filter. However, it is not necessary for all of the filters to have different transmission spectra. At least two or more of the filters of the filter array 10 have different transmission spectra. In other words, the filter array 10 includes two or more filters having different transmission spectra. In one example, the number of patterns of transmission spectra of the filters included in the filter array 10 may be greater than or equal to the number N of wavelength bands included in the target wavelength band. The filter array 10 may be designed such that half or more of the filters included therein have different transmission spectra.

Figs. 3A and 3B illustrate the relationship between the target wavelength band W and the wavelength bands W1, W2, ..., and WN included therein. The target wavelength band W may be set to various ranges depending on the application. For example, the target wavelength band W may be a visible light wavelength band of about 400 nm to about 700 nm, a near-infrared wavelength band of about 700 nm to about 2500 nm, or a near-ultraviolet wavelength band of about 10 nm to about 400 nm. Alternatively, the target wavelength band W may be a mid-infrared or far-infrared wavelength band or a wavelength band of radio waves, such as terahertz waves or millimeter waves. Thus, the wavelength band to be used is not limited to a visible light wavelength band. In this specification, the term "light" refers not only to visible light but also to non-visible light such as near-ultraviolet rays, near-infrared rays, and radio waves for convenience.

In the example illustrated in Fig. 3A, N is any integer of greater than or equal to 4, and the target wavelength band W is divided into N equal wavelength bands: the wavelength band W1, the wavelength band W2, ..., and the wavelength band WN. However, the wavelength bands are not limited to this. The wavelength bands included in the target wavelength band W may be set in any way. For example, the wavelength bands may have different bandwidths. Adjacent ones of the wavelength bands may have a gap therebetween. In the example illustrated in Fig. 3B, the wavelength bands have different bandwidths, and a gap is provided between two adjacent ones of the wavelength bands. Thus, the wavelength bands may be set in any way as long as the wavelength bands differ from each other. The number N of wavelength bands may be less than or equal to 3.

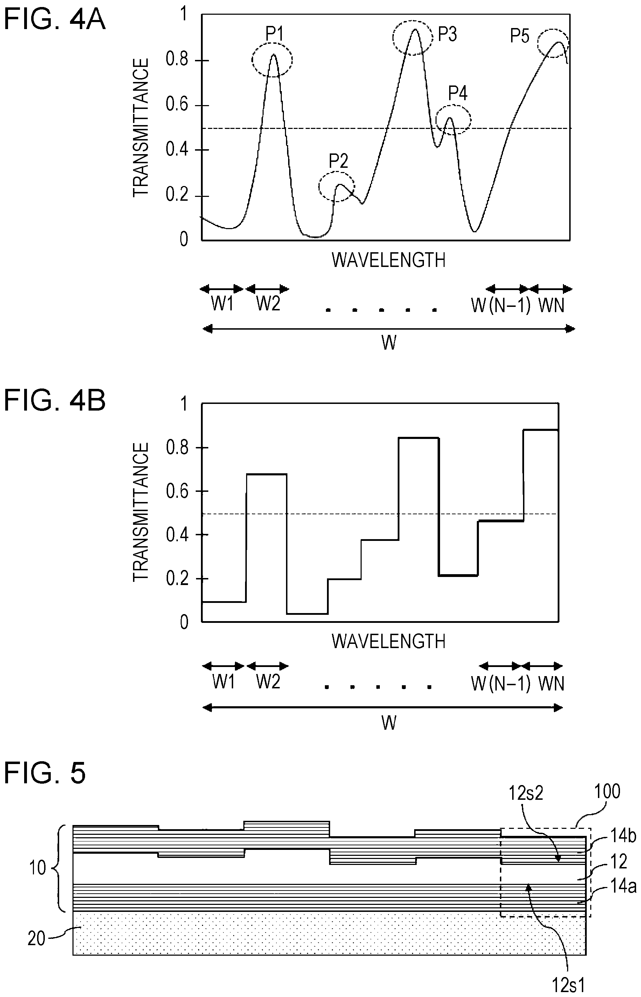

Fig. 4A illustrates the transmission spectral characteristics of a certain filter included in the filter array 10. In the example illustrated in Fig. 4A, the transmission spectrum has local maxima P1 to P5 and local minima at respective wavelengths in the target wavelength band W. In the example illustrated in Fig. 4A, the light transmittance within the target wavelength band W is normalized so that the maximum value is 1 and the minimum value is 0. In the example illustrated in Fig. 4A, the transmission spectrum has local maxima in wavelength bands such as the wavelength band W2 and the wavelength band WN. Thus, in the present embodiment, the transmission spectrum of each filter has local maxima in at least two wavelength bands among the wavelength bands W1 to WN. As is clear from Fig. 4A, the local maxima P1, P3, P4, and P5 are greater than or equal to 0.5.

As described above, the light transmittance of each filter varies depending on the wavelength. Therefore, the filter array 10 transmits large portions of components of the incident light in certain wavelength bands, and transmits smaller portions of components of the incident light in other wavelength bands. For example, the transmittance may be greater than 0.5 for light in k wavelength bands among the N wavelength bands, and less than 0.5 for light in the remaining N-k wavelength bands. Here, k is an integer satisfying $2 \leq k < N$. If the incident light is white light in which all of the wavelength components of the visible light are uniform, the filter array 10 causes each filter to modulate the incident light into light having discrete intensity peaks at respective wavelengths, and outputs these multi-wavelength light components in a superposed state.

Fig. 4B illustrates the result of averaging the transmission spectrum illustrated in Fig. 4A, for example, in each of the wavelength band W1, the wavelength band W2, ..., and the wavelength band WN. The averaged transmittance is obtained by calculating an integral of the transmission spectrum $T(\lambda)$ for each wavelength band and dividing the integral by the bandwidth of the wavelength band. In this specification, the value of the transmittance averaged for each wavelength band is referred to as the transmittance of the wavelength band. In this example, the transmittance is significantly high for the wavelength bands having the local maxima P1, P3, and P5. In particular, the transmittance is higher than 0.8 for the wavelength bands having the local maxima P3 and P5.

The resolution of the transmission spectrum of each filter in the wavelength direction may be set approximately to the desired wavelength bandwidth. In other words, in a wavelength range of the transmission spectrum curve including a single local maximum, the width of a range in which the value is at or above the average of the local maximum and a local minimum closest to the local maximum may be set approximately to the desired wavelength bandwidth. In this case, if the transmission spectrum is divided into frequency components by, for example, Fourier transform, the frequency component corresponding to the wavelength band has a relatively large value.

The filter array 10 typically includes filters arranged in a grid pattern, as illustrated in Fig. 2A. Some or all of the filters have different transmission spectra. The wavelength distribution and spatial distribution of the light transmittance of the filters included in the filter array 10 may be, for example, random distributions or quasi-random distributions.

The concept of a random distribution and a quasi-random distribution will now be described. Each filter of the filter array 10 can be regarded as, for example, a vector element having values of 0 to 1 depending on the light transmittance. When the transmittance is 0, the value of the vector element is 0. When the transmittance is 1, the value of the vector element is 1. In other words, a group of filters arranged along a single line in the row direction or the column direction can be regarded as a multidimensional vector having values of 0 to 1. Therefore, the filter array 10 can be regarded as including multidimensional vectors arranged in the column direction or the row direction. Here, the random distribution means that any two of the multidimensional vectors are independent, that is, not parallel. The quasi-random distribution means that some of the multidimensional vectors are not independent of each other. Therefore, in the random distribution and the quasi-random distribution, a vector whose elements are the light transmittance values for a first wavelength band in filters belonging to a group of filters arranged along a single row or column among the filters and a vector whose elements are the light transmittance values for the first wavelength band in filters belonging to a group of filters arranged along another row or column are independent of each other. Similarly, for a second wavelength band that differs from the first wavelength band, a vector whose elements are the light transmittance values for the second wavelength band in filters belonging to a group of filters arranged in a single row or column among the filters and a vector whose elements are the light transmittance values for the second wavelength band in filters belonging to a group of filters arranged in another row or column are independent of each other.

In the example illustrated in Figs. 2A to 2D, the filter array 10 has a grayscale transmittance distribution in which the transmittance of each filter may be any value that is greater than or equal to 0 and less than or equal to 1. However, the distribution is not necessarily a grayscale transmittance distribution. For example, a binary scale transmittance distribution, in which the transmittance of each filter may be either substantially 0 or substantially 1, may be employed. In a binary scale transmittance distribution, each filter transmits the majority of light in at least two of the wavelength bands included in the target wavelength band, and blocks the majority of light in the remaining wavelength bands. Here, the "majority" refers to greater than or equal to roughly 80%.

Some of the filters, for example, half of the filters may be replaced with transparent filters. The transparent filters transmit light in all of the wavelength bands W1 to WN included in the target wavelength band at a high transmittance. The high transmittance is, for example, greater than or equal to 0.8. In such a structure, the transparent filters may be arranged in, for example, a checkerboard pattern. In other words, in two arrangement directions in which the filters of the filter array 10 are arranged, filters having different light transmittances for different wavelengths and the transparent filters may be alternately arranged. In the example illustrated in Fig. 2A, the two arrangement directions are the horizontal direction and the vertical direction.

Data representing the spatial distribution of the spectral transmittance of the filter array 10 is acquired in advance based on design data or measurement calibration, and stored in a storage medium included in the signal processing circuit 200. This data is used in an operational process described below.

The filter array 10 may be formed using, for example, multilayer films, organic materials, diffraction grating structures, or fine structures containing metal. When multilayer films are used, for example, dielectric multilayer films or multilayer films containing metal layers may be used. In this case, the multilayer films for different filters may be formed to differ in at least one of the thickness, the material, and the order in which layers are stacked. Thus, filters having different spectral characteristics can be obtained. When multilayer films are used, the spectral transmittance with sharp increases and decreases can be obtained. When organic materials are used, the organic materials for different cells may contain different pigments or dyes, or layers of different materials may be stacked for different cells. When diffraction grating structures are used, different filters may be provided with diffraction structures with different diffraction pitches or depths. When fine structures containing metal are used, the fine structures may be produced by spectroscopy using the plasmonic effect.

<Signal Processing Circuit>

The method by which the signal processing circuit 200 illustrated in Fig. 1 reconstructs the multi-wavelength separated images 220 will now be described. Here, "multi-wavelength" means, for example, more wavelength bands than the wavelength bands for three colors R, G, and B acquired by an ordinary color camera, that is, four or more wavelength bands. The number of wavelength bands may be, for example, 4 to about 100. The number of wavelength bands is also referred to as the "number of spectral bands". The number of spectral bands may be greater than 100 depending on the application.

The image sensor 50 generates an image signal based on light transmitted through the filter array 10, and transmits the image signal to the signal processing circuit 200. The signal processing circuit 200 performs compressed sensing to reconstruct the separated images 220 corresponding to respective ones of the four or more wavelength bands from the compressed image represented by the image signal acquired by the image sensor 50. The term "reconstruct" may be rephrased as "reconstruct".

The data to be obtained is the separated images 220, and the data is represented by f. When N is the number of spectral bands, f is data obtained by integrating image data f1, f2, ..., and fN of the respective bands. Referring to Fig. 1, the horizontal direction of the image is defined as the x direction, and the vertical direction of the image is defined as the y direction. When n is the number of pixels in the x direction and m is the number of pixels in the y direction of the image data to be obtained, each of the image data f1, f2, ..., and fN is two-dimensional data of $n \times m$ pixels. Therefore, the data f is three-dimensional data containing $n \times m \times N$ elements. The image 120 acquired after being coded and multiplexed by the filter array 10 is data g of $n \times m$ elements. The data g can be expressed by the following Expression (1).

[Math. 1]

$$g = Hf = H \begin{bmatrix} f1 \\ f2 \\ \vdots \\ fN \end{bmatrix} \qquad (1)$$

Here, each of f1, f2, ..., and fN is data including $n \times m$ elements. Therefore, the vector on the right-hand side is a one-dimensional vector with $n \times m \times N$ rows and one column. The vector g is converted into a one-dimensional vector with $n \times m$ rows and one column, and then subjected to calculation. The matrix H represents a transform of coding and intensity-modulating the components f1, f2, ..., and fN of the vector f with coding information that differs for each wavelength band and adding the components together. Therefore, H is a matrix with $n \times m$ rows and $n \times m \times N$ columns.

If the vector g and the matrix H are given, it may seem that f can be calculated by solving the inverse problem of Expression (1). However, since the number of elements $n \times m \times N$ in the data f to be obtained is greater than the number of elements n×m in the acquired data g, this problem is an ill-posed problem and cannot be solved as-is. Accordingly, the signal processing circuit 200 uses the redundancy of the image included in the data f to find a solution by compressed sensing. Specifically, the data f to be obtained is estimated by solving the following Expression (2).
[Math. 2]

$$f' = \arg \min_{f}\{\|g - Hf\|_{l_2} + \tau \Phi(f)\} \qquad (2)$$

Expression (1) and Expression (2) include the following expression.
[Math. 3]

$$g \qquad (3)$$

The above may be expressed as g in the description regarding Expressions (1) and (2).

Here, f' represents the estimated data of f. The first term inside the curly brackets in the above expression represents a so-called residual error, which is the amount of deviation between the estimated result Hf and the acquired data g. Although the sum of squares is set as the residual error herein, the absolute value or the square root of the sum of squares, for example, may also be set as the residual error. The second term inside the curly brackets is a regularization term or a stabilization term described below. Expression (2) means to determine f that minimizes the sum of the first term and the second term. The signal processing circuit 200 may carry out recursive iterative operations to cause the solution to converge, thereby calculating the final solution f'.

The first term inside the curly brackets in Expression (2) means an operation of calculating the sum of squares of the difference between the acquired data g and Hf obtained by system transformation of the estimated f by the matrix H. In the second term, φ(f) is a constraint for regularization of f, and is a function reflecting sparsity information of the estimated data. The function serves to smooth or stabilize the estimated data. The regularization term may be expressed by, for example, the discrete cosine transform (DCT), the wavelet transform, the Fourier transform, or the total variation (TV) of f. When, for example, the total variation is used, stable estimation data in which the influence of noise in the observed data g is suppressed can be acquired. The sparsity of the object 60 in the space of each regularization term differs depending on the texture of the object 60. The regularization term may be selected such that the texture of the object 60 is sparser in the space of the regularization term. Alternatively, multiple regularization terms may be included in the operation. Also, τ is a weighting factor. As the weighting factor τ increases, a larger amount of redundant data is removed, and the compression ratio increases. As the weighting factor τ decreases, the degree of convergence to the solution decreases. The weighting factor τ is set to an appropriate value such that f converges to some degree but over compression does not occur.

Although an example of the operation using the compressed sensing represented by Expression (2) is described herein, other methods may also be used. For example, other statistical methods, such as the maximum likelihood estimation method or the Bayesian estimation method, may be used. Also, the number of separated images 220 may be any number, and each wavelength band may be set to any wavelength band. The reconstruction method is described in detail in PTL 1. The entire disclosure of U.S. Patent No. 9,599,511, which corresponds to PTL 1, is incorporated herein by reference.

<Structure of Filter Array Including Fabry-Perot Filter>

An example of the specific structure of the filter array 10 according to an embodiment of the present disclosure will now be described with reference to Fig. 5. Fig. 5 is a schematic sectional view illustrating an example of the structure of the filter array 10 according to an embodiment of the present disclosure. For simplicity, the sectional view illustrates six filters 100 included in a single row. The filter array 10 illustrated in Fig. 5 is supported by a substrate 20 and includes filters 100 arranged two-dimensionally in a square grid pattern. In the example illustrated in Fig. 5, the filters 100 included in the filter array 10 all have a resonance structure. The resonance structure is a structure in which light of a certain wavelength forms standing waves and exists stably.

In the example illustrated in Fig. 5, a first reflection layer 14a, an interference layer 12, and a second reflection layer 14b are stacked in that order on the substrate 20. Each of the resonance structures illustrated in Fig. 5 includes the interference layer 12 having a first surface 12s1 and a second surface 12s2 positioned opposite to each other, the first reflection layer 14a provided on the first surface 12s1, and the second reflection layer 14b provided on the second surface 12s2. Each of the first surface 12s1 and the second surface 12s2 may have a reflectance of, for example, greater than or equal to 80%. The reflectance may be less than 80%, but may be designed to be greater than or equal to 40%. The first reflection layer 14a and the second reflection layer 14b may be designed to have the same thickness. The filters 100 in which the interference layer 12 has different thicknesses have different transmission spectra in the target wavelength band W. The transmission spectrum of each of the resonance structures illustrated in Fig. 5 has two or more sharp peaks in the target wavelength band W. In this specification, the filters having such transmission spectra are referred to as "multi-mode filters".

In the example illustrated in Fig. 5, each of the first reflection layer 14a and the second reflection layer 14b is formed of a distributed Bragg reflector (DBR) in which high-refractive-index layers and low-refractive-index layers are alternately stacked. At least one of the first reflection layer 14a and the second reflection layer 14b may be formed of a metal thin film.

The phrase "at least one of the first reflection layer 14a and the second reflection layer 14b is formed of a metal thin film" may be interpreted as (a) the first reflection layer 14a is formed of a metal thin film, (b) the second reflection layer 14b is formed of a metal thin film, or (c) the first reflection layer 14a is formed of a metal thin film and the second reflection layer 14b is formed of a metal thin film.

The DBR includes one or more pairs of layers, each pair including a high-refractive-index layer and a low-refractive-index layer having different refractive indices. The high-refractive-index layer has a refractive index higher than that of the low-refractive-index layer. The DBR has a high-reflectance wavelength band called a stop band due to Bragg reflection caused by a periodic multilayer structure. As the number of the above-described pairs of layers increases, the reflectance of the stop-band approaches 100%.

Assume that $\lambda$ is a wavelength in the target wavelength band W, nH is the refractive index of the high-refractive-index layers, and nL is the refractive index of the low-refractive-index layers. When the DBR includes one or more pairs of a high-refractive-index layer with a thickness of $\lambda/(4nH)$ and a low-refractive-index layer with a thickness of $\lambda/(4nL)$, the DBR efficiently reflects light with the wavelength $\lambda$. When the target wavelength band W is the range of greater than or equal to a wavelength $\lambda i$ and less than or equal to a wavelength $\lambda f$, the thicknesses of the high-refractive-index layers and the low-refractive-index layers may be changed stepwise so that the DBR includes pairs of layers ranging from a pair of layers corresponding to the wavelength $\lambda i$ to a pair of layers corresponding to the wavelength $\lambda f$. As a result, the DBR can efficiently reflect all of the light in the target wavelength band W.

The high-refractive-index layers and the low-refractive-index layers included in each of the first reflection layer 14a and the second reflection layer 14b and the interference layer 12 may be formed of, for example, a material having a low absorptance with respect to light in the target wavelength band W. When the target wavelength band W is in the visible light region, such a material may be, for example, at least one selected from the group consisting of $SiO_2$, $Al_2O_3$, $SiO_xN_y$, $Si_3N_4$, $Ta_2Os$, and $TiO_2$. When the target wavelength band W is in the infrared region, such a material may be, for example, at least one selected from the group consisting of single-crystal Si, polycrystalline Si, and amorphous Si in addition to $SiO_2$, $Al_2O_3$, $SiO_xN_y$, $Si_3N_4$, $Ta_2O_5$, and $TiO_2$ mentioned above. Similarly, the substrate 20 may be formed of, for example, a material having a low absorptance with respect to light in the target wavelength band W. When the target wavelength band W is in the visible light region, such a material may be at least one selected from the group consisting of $SiO_2$, ITO, $Al_2O_3$, GaN, $Nb_2O_5$, $Ta_2Os$, and SiC. When the target wavelength band W is in the infrared region, such a material may be, for example, at least one selected from the group consisting of single-crystal Si, polycrystalline Si, amorphous Si, and InP in addition to $SiO_2$, ITO, $Al_2O_3$, GaN, $Nb_2O_5$, $Ta_2O_5$, and SiC mentioned above. The thickness of each of the first reflection layer 14a and the second reflection layer 14b may be, for example, greater than or equal to 100 nm and less than or equal to 900 nm. The thickness of the interference layer 12 may be, for example, greater than or equal to 10 nm and less than or equal to 500 nm. The thickness of the substrate 20 may be, for example, greater than or equal to 0.1 mm and less than or equal to 1 mm.

In this specification, light in the interference layer 12 is assumed to be reflected at the first surface 12s1 and the second surface 12s2 unless the exact position of the surface at which the light is reflected is relevant. In the present embodiment, a portion of light incident on the first reflection layer 14a or the second reflection layer 14b from the interference layer 12 enters the first reflection layer 14a or the second reflection layer 14b in practice and is reflected at the interfaces between the high-refractive-index layers and the low-refractive-index layers. The light is reflected at different interfaces depending on the wavelength. However, for convenience of description, it is assumed that the light is reflected at the first surface 12s1 and the second surface 12s2.

In the filter array 10 according to the present embodiment, multiple types of multi-mode filters having different transmission spectra in the target wavelength band W may be in an irregular arrangement. The irregular arrangement is an arrangement that is not clearly regular or periodic, and is also an aperiodic arrangement. The irregular arrangement may be an arrangement based on the above-described concept of random or quasi-random distribution. In one example, the filter array 10 includes several million filters 100 arranged two-dimensionally, and the several million filters 100 include nine types of multi-mode filters in the irregular arrangement. The nine types of multi-mode filters may be randomly or quasi-randomly distributed. The filter array 10 that is highly random as described above enables a more accurate reconstruction of the separated images 220.

The multiple types of multi-mode filters having different transmission spectra may be first filters, ..., and nth filters. Here, n is an integer greater than or equal to 2, and n may be 9. Each of the first filters has a first transmission spectrum in the target wavelength band W, ..., and each of the $n^{th}$ filters has an $n^{th}$ transmission spectrum in the target wavelength band W. The first transmission spectrum, ..., and the $n^{th}$ transmission spectrum differ from each other. The first transmission spectrum has local maxima, ..., and the $n^{th}$ transmission spectrum has local maxima. The first filters are arranged irregularly in the filter array 10, ..., and the $n^{th}$ filters are arranged irregularly in the filter array 10.

The filter array 10 according to the present embodiment may include a filter that does not have the above-described resonance structure. For example, the filter array 10 according to the present embodiment may include a filter having a light transmittance with no wavelength dependency, such as a transparent filter or a neutral density (ND) filter.

In this specification, the filters 100 including the DBRs are also referred to as "Fabry-Perot filters". A Fabry-Perot filter is a type of an interference filter. Another type of interference filter, such as a color separation filter including a diffraction grating or the like, may be used instead of the Fabry-Perot filter.

<Light Detection Device>

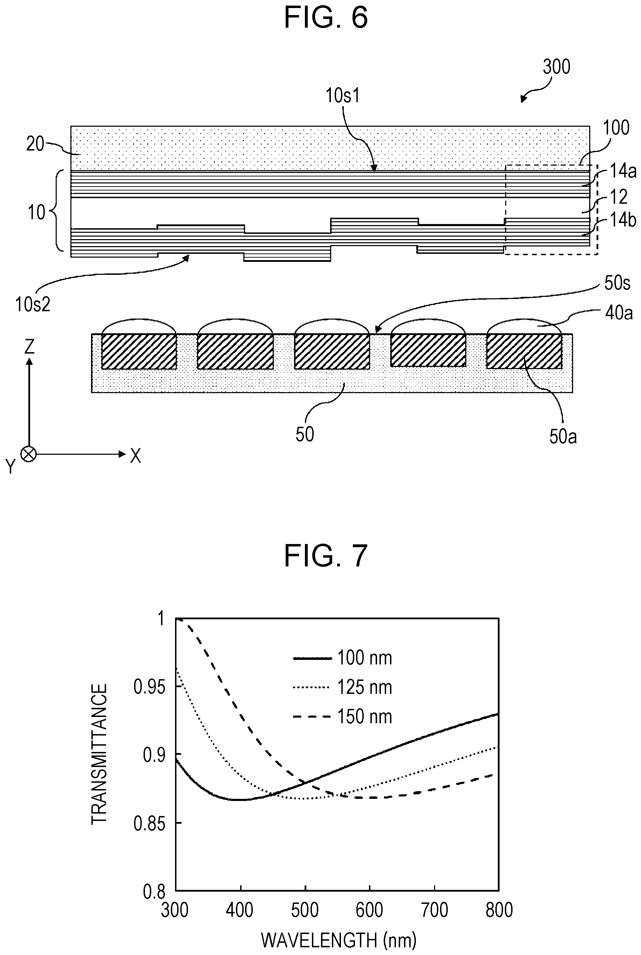

An example of the light detection device 300 according to the present embodiment will now be described with reference to Figs. 6 to 8. In the example illustrated in Fig. 6 and the following drawings, for simplicity, each of the filter array 10 and the image sensor 50 is assumed to include several tens of unit cells arranged two-dimensionally. In practice, each of the filter array 10 and the image sensor 50 may include, for example, several million unit cells that are arranged two-dimensionally. The illustrated structure is merely an example, and any number of unit cells may be arranged in any way.

Fig. 6 is a schematic sectional view illustrating an example of the light detection device 300 according to an embodiment of the present disclosure. The sectional view shows a cross-section of the filter array 10 and the image sensor 50 along a single row. Fig. 6 illustrates a partial structure of the light detection device 300. For convenience of description, Fig. 6 shows an X-axis, a Y-axis, and a Z-axis that are orthogonal to each other. The direction of the arrow of the X-axis is referred to as the +X direction, and the direction opposite thereto is referred to as the -X direction. This also applies to the directions of the arrows of the Y-axis and the Z-axis and the directions opposite thereto. The +Z direction is also referred to as "upward", and the -Z direction is also referred to as "downward". These axes do not limit the position and orientation of the light detection device 300, and the light detection device 300 may be in any position and orientation in practice. The light detection device 300 according to the present embodiment includes the filter array 10, the substrate 20 supporting the filter array 10, and the image sensor 50.

The structure of the filter array 10 and the substrate 20 illustrated in Fig. 6 is the same as that of the filter array 10 and the substrate 20 illustrated in Fig. 5 except that the structure is vertically inverted. The substrate 20 is used in the process of manufacturing the light detection device 300. Although the substrate 20 is not necessary, the substrate 20 is included in the light detection device 300 when the substrate 20 is not removed in the process of manufacturing the light detection device 300.

The filter array 10 includes the filters 100 arranged two-dimensionally in a square grid pattern along an XY plane. The filters 100 include multiple types of multi-mode filters having different transmission spectra in the target wavelength band W. The multiple types of multi-mode filters are arranged irregularly based on, for example, the concept of the above-described random or quasi-random distribution. The interference layer 12 has different thicknesses for different transmission spectra of the multi-mode filters. The pitches of the filters 100 in the X direction and the Y direction may, for example, be uniform. The pitch in the X direction and the pitch in the Y direction may, for example, be equal to each other. The pitches in the X direction and the Y direction may, for example, be greater than or equal to 1 $\mu$m and less than or equal to 10 $\mu$m.

The filter array 10 has a light incident surface 10s1 and a light-emitting surface 10s2 positioned opposite to the light incident surface 10s1. The light incident surface 10s1 is formed of a collection of light incident surfaces of the filters 100. The light-emitting surface 10s2 is formed of a collection of light-emitting surfaces of the filters 100. **In** the example illustrated in Fig. 6, the light incident surface 10s1 is flat. **In** other words, the light incident surfaces of the filters 100 form a flat surface without steps. **In** contrast, the light-emitting surface 10s2 is uneven, that is, has steps. **In** other words, the light-emitting surfaces of the filters 100 form an uneven surface. The uneven surface is formed because the filters 100 have different thicknesses. The differences between the thicknesses of the filters 100 are caused by the differences between the thicknesses of the interference layers. The substrate 20 is provided on the light incident surface 10s1 of the filter array 10.

The image sensor 50 has a light detection surface 50s facing the light-emitting surface 10s2, and includes pixels 50a arranged two-dimensionally in a square grid pattern along the light detection surface 50s. The light detection surface 50s is flat. The pixels 50a have a sensitivity in the target wavelength band W. The pitches of the pixels 50a in the X direction and the Y direction may, for example, be uniform. The pitch in the X direction and the pitch in the Y direction may, for example, be equal to each other. The pitches in the X direction and the Y direction may be, for example, greater than or equal to 1 $\mu$m and less than or equal to 10 $\mu$m.

The pixels 50a may be provided with respective microlenses 40a arranged directly thereabove. The microlenses 40a can efficiently guide the light transmitted through the filters 100 to photo-electric conversion portions of the pixels 50a. The light incident surface 10s1 and the light detection surface 50s are parallel to each other. The phrase "the light incident surface 10s1 and the light detection surface 50s are parallel to each other" does not mean that they are strictly parallel to each other, but means that the angle between the direction normal to the light incident surface 10s1 and the direction normal to the light detection surface 50s is less than or equal to 10°. The direction normal to the light incident surface 10s1 is a direction perpendicular to the light incident surface 10s1 and away from the filter array 10. The direction normal to the light detection surface 50s is a direction perpendicular to the light detection surface 50s and away from the image sensor 50.

In the light detection device 300 according to the present embodiment, the pitch of the filters 100 included in the filter array 10 differs from the pitch of the pixels 50a included in the image sensor 50. In other words, the filters 100 and the pixels 50a are not in one-to-one correspondence. The reason for this will be described below. In this specification, the pitch of the filters 100 will be simply referred to as the "filter pitch", and the pitch of the pixels 50a will be simply referred to as the "pixel pitch".

The light reflected by the object 60 mainly travels in the -Z direction through the substrate 20, is incident on the light incident surface 10s1 of the filter array 10, passes through the filter array 10, and is emitted from the light-emitting surface 10s2 of the filter array 10. The light emitted from the light-emitting surface 10s2 of the filter array 10 is incident on the light detection surface 50s of the image sensor 50.

The distance between the light-emitting surface 10s2 and the light detection surface 50s differs for each multi-mode filter. The light detection device 300 according to the present embodiment is manufactured by fixing the filter array 10 and the image sensor 50 such that the uneven surface of the filter array 10 faces the light detection surface 50s. Since the distance between the light-emitting surface 10s2 and the light detection surface 50s is not uniform, even when light is reflected multiple times between the light-emitting surface 10s2 and the light detection surface 50s, the appearance of interference fringes on the captured image due to the interference of light can be reduced. As a result, the imaging characteristics of the light detection device 300 can be improved. Since the multiple types of multi-mode filters are irregularly arranged, not only can the separated images 220 be more accurately reconstructed, but also the appearance of interference fringes on the captured image can be further reduced.

In addition, in the present embodiment, since the second reflection layer 14b is disposed to face the light detection surface 50s of the image sensor 50 instead of the substrate 20, the filter array 10 and the image sensor 50 can be brought closer to each other. The distance between a portion of the light-emitting surface 10s2 closest to the light detection surface 50s and the light detection surface 50s (hereinafter sometimes referred to as a "minimum distance dm") may be, for example, greater than or equal to 0.1 $\mu$m and less than or equal to 200 $\mu$m. In the present embodiment, the F-number of the optical system 40 illustrated in Fig. 1 may be less than or equal to 16, and the pixel pitch may be about 6 $\mu$m. In this case, the focal depth is about 200 $\mu$m. Therefore, when the minimum distance between the light-emitting surface 10s2 and the light detection surface 50s is within the above-described range, most of the light that has passed through each filter 100 is incident on a region of the light detection surface 50s positioned directly below the filter 100.

Light interference may occur between the light-emitting surface 10s2 and the light detection surface 50s depending on the distance between these two surfaces. This interference may cause deviations between the spectra of light detected by the pixels 50a and the transmission spectra of the multi-mode filters. The interference that may occur depends on the distance d between the light-emitting surface 10s2 and the light detection surface 50s. When the round-trip distance 2d between the light-emitting surface 10s2 and the light detection surface 50s is an integer multiple of the wavelength $\lambda$, that is, when the distance d = m1$\lambda$/2, light is intensified by the interference. As a result, the transmittance is at a local maximum when the wavelength $\lambda$ = 2d/m1. Here, m1 is an integer greater than or equal to 1. When the round-trip distance 2d between the light-emitting surface 10s2 and the light detection surface 50s is a half-integer multiple of the wavelength $\lambda$, that is, when the distance d = (m2 + 1/2)$\lambda$/2, the light is weakened by the interference. As a result, the transmittance is at a local minimum when the wavelength $\lambda$ = 2d/(m2 + 1/2). Here, m2 is an integer greater than or equal to 0. The maximum wavelength at which the transmittance is at a local minimum due to interference is obtained when m2 = 0, that is, $\lambda$ = 4d. In this specification, the interference that occurs when the distance d = $\lambda$/4 is referred to as "interference of the fundamental mode".

Fig. 7 is a graph showing the transmission spectrum of a structure including two media having the same refractive index and an air gap layer positioned between the media. The solid line, the dotted line, and the dashed line in Fig. 7 show the cases in which a thickness d of the gap layer is 100 nm, 125 nm, and 150 nm, respectively. The two media are $SiO_2$, and the refractive index of each medium is n = 1.5. As illustrated in Fig. 7, when the distance d is 100 nm, the interference of the fundamental mode occurs for light with the wavelength $\lambda$ of 400 nm, and the transmittance is at a local minimum at a wavelength $\lambda$ around 400 nm. Similarly, when the distance d is 125 nm, the transmittance is at a local minimum at a wavelength $\lambda$ around 500 nm. When the distance d is 150 nm, the transmittance is at a local minimum at a wavelength $\lambda$ around 600 nm. As illustrated in Fig. 7, the transmittance gradually increases when the wavelength increases beyond the wavelength at which the interference of the fundamental mode occurs, and sharply increases toward a local maximum when the wavelength decreases below the wavelength at which the interference of the fundamental mode occurs.

The light-detecting element of each pixel detects light affected by the above-described interference in addition to the transmission spectrum of the multi-mode filter. In other words, the spectrum of light detected by each pixel may greatly differ from the transmission spectrum of the multi-mode filter, causing degradation of the imaging characteristics, such as an increase in the reconstruction error of the separated images 220.

Assume that the target wavelength band is the wavelength band of visible light, that is, greater than or equal to about 400 nm and less than or equal to about 700 m. When the minimum distance dm is less than or equal to 0.1 $\mu$m, there is a possibility that the transmittance will be affected by the interference and reduced over the entire target wavelength band. When the minimum distance dm is greater than 0.1 $\mu$m, that is, when there is no pixel at which the distance dm is less than or equal to 0.1 $\mu$m, the influence of the interference at a wavelength around 400 nm can be reduced in the target wavelength band. Therefore, the imaging characteristics can be improved compared to when the minimum distance dm is less than or equal to 0.1 $\mu$m.

Similarly, when the minimum distance dm is greater than 0.125 $\mu$m, the influence of interference can be reduced in the wavelength bands of greater than or equal to 400 nm and less than or equal to 500 nm in the target wavelength band, and the imaging characteristics can be further improved. Similarly, when the minimum distance dm is greater than 0.150 $\mu$m, the influence of interference can be reduced in the wavelength bands of greater than or equal to 400 nm and less than or equal to 600 nm in the target wavelength band, and the imaging characteristics can be still further improved.

The above can be generalized as follows. That is, when the target wavelength band is $\lambda1 \leq \lambda \leq \lambda2$, the imaging characteristics can be improved by setting the minimum distance dm to a distance greater than $\lambda1/4$. The imaging characteristics can be further improved by setting the minimum distance dm to a distance greater than $\lambda2/4$.

As the minimum distance dm increases, the transmittance illustrated in Fig. 7 oscillates with a shorter period in response to a change in the wavelength in the target wavelength band due to the influence of interference. When the oscillation width is sufficiently smaller than, for example, the width of each of the wavelength band W1, the wavelength band W2, ..., and wavelength band WN included in the target wavelength band W illustrated in Fig. 3A, the short-period oscillation is averaged and canceled in each of the wavelength band W1, the wavelength band W2, ..., and the wavelength band WN. As a result, the separated images 220 are substantially unaffected by the interference, and the imaging characteristics can be further improved.

The lower-limit wavelength $\lambda1$ and the upper-limit wavelength $\lambda2$ of the target wavelength band may respectively be the lower-limit wavelength and the upper-limit wavelength of the wavelength components included in the separated images 220. Alternatively, the lower-limit wavelength $\lambda1$ and the upper-limit wavelength $\lambda2$ of the target wavelength band may respectively be the lower-limit wavelength and the upper-limit wavelength of light detectable by the image sensor 50. Alternatively, the lower-limit wavelength $\lambda1$ and the upper-limit wavelength $\lambda2$ of the target wavelength band may respectively be the lower-limit wavelength and the upper-limit wavelength of light incident on the image sensor 50.

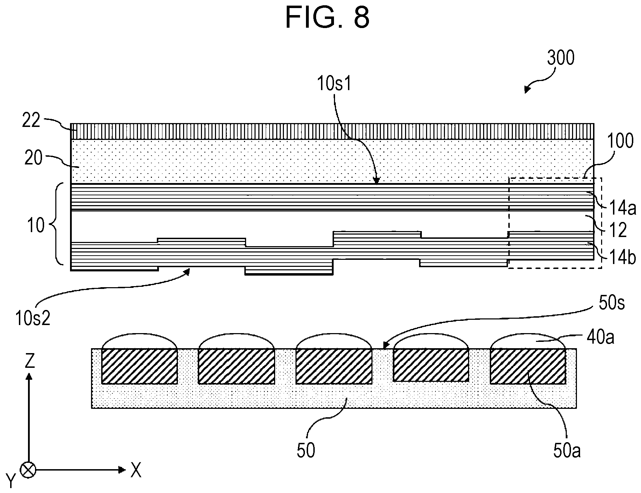

The structure illustrated in Fig. 6 may have an additional component. Fig. 8 is a schematic sectional view illustrating another example of the light detection device 300. The structure illustrated in Fig. 8 differs from the structure illustrated in Fig. 6 in that the substrate 20 includes an antireflection film 22 on a surface opposite to the surface supporting the filter array 10. The antireflection film 22 can reduce the reflection of light at the interface between the substrate 20 illustrated in Fig. 6 and air. Therefore, the light detection efficiency of the light detection device 300 can be improved. In addition, the antireflection film 22 can reduce warping of the filter array 10 and the substrate 20 or reverse the direction in which filter array 10 and the substrate 20 warp. When the antireflection film 22 serves to adjust the warping of the filter array 10 and the substrate 20, the appearance of the interference fringe on the captured image can be further reduced.

<Structure and Arrangement of Filter Array and Image Sensor in Comparative Example>

In general, as described in paragraph [0073] of PTL 1, the filters 100 included in the filter array 10 are arranged to face the pixels 50a of the image sensor 50 in one-to-one correspondence. Therefore, the filter pitch is preferably equal to the pixel pitch. In such a structure, the resolution of the image of light transmitted through and coded by the filter array 10 is substantially equal to the resolution of the pixels 60a. Since the light transmitted through each filter 100 is incident on one of the pixels 50a that faces the filter 100, the separated images 220 can be easily reconstructed by the above-described operation.

However, when the filter array 10 and the image sensor 50 are bonded together, the filter array 10 and the image sensor 50 may have an inevitable misalignment therebetween on the order of micrometers due to tolerances in the bonding process. Since the filter pitch is also on the order of micrometers, when the misalignment is taken into consideration, the filters 100 included in the filter array 10 do not face the pixels 50a included in the image sensor 50 in one-to-one correspondence.

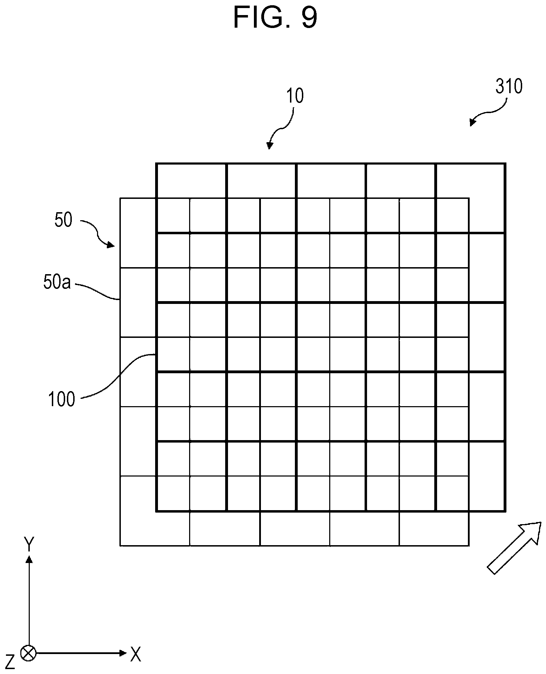

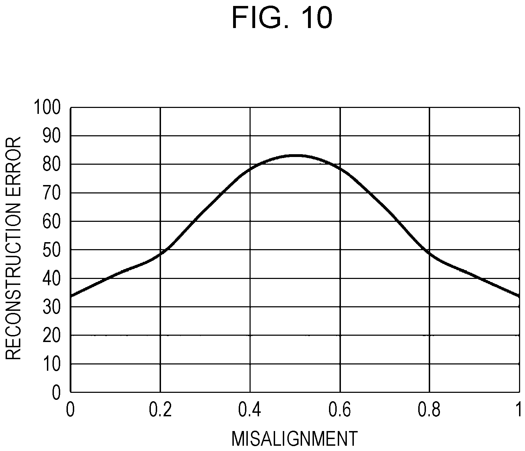

The influence of the misalignment between the filter array 10 and the image sensor 50 on the reconstruction of the separated images 220 in a comparative example in which the filter pitch and the pixel pitch are equal will now be described with reference to Figs. 9 and 10. Fig. 9 is a schematic plan view of a light detection device 310 according to the comparative example. The plan view of the light detection device 310 is viewed from the light-incident-surface side of the filter array 10. In the plan view, the substrate 20 is omitted. In the example illustrated in Fig. 9, the thick lines show the filter array 10 including the filters 100 arranged in the matrix pattern, and the thin lines show the image sensor 50 including the pixels 50a arranged in a matrix pattern. The filters 100 and the pixels 50a have square shapes of the same size.

In the example illustrated in Fig. 9, the filters 100 included in the filter array 10 are misaligned from the pixels 50a included in the image sensor 50 by one-half of the pitch in each of the X direction and the Y direction. The blank arrow illustrated in Fig. 9 shows the misalignment of the filter array 10 relative to the image sensor 50. Due to the misalignment, light transmitted through one of the filters 100 is incident on four pixels 50a. This degrades the independence between the pixels 50a. As a result, the reconstruction accuracy of the separated images 220 is reduced.

Fig. 10 illustrates the relationship between the misalignment between the filter array 10 and the image sensor 50 and the reconstruction error of the separated images 220 according to the comparative example. The horizontal axis of Fig. 10 represents the misalignment between the filter array 10 and the image sensor 50. The filter array 10 is misaligned by the same distance in the X direction and the Y direction. On the horizontal axis, 0 and 1 mean that the filters 100 completely coincide with the pixels 50a, and 0.5 means that the filters 100 are misaligned from the pixels 50a by half, as illustrated in Fig. 9. The vertical axis of Fig. 10 represents the calculation result of the reconstruction error of the separated images 220. The reconstruction error is the degree of difference between the reconstructed separated images 220 and the correct images, and can be expressed using various indices, such as a mean squared error (MSE) and a peak signal-to-noise ratio (PSNR). In this specification, the MSE is used. In practice, the correct images may be difficult to define. In such a case, for example, the correct images may be defined by measurements using bandpass filters that pass light of specific wavelengths, subjects with known transmission spectra and/or reflection spectra, or lasers with known light-emission wavelengths.

In the calculation of the reconstruction error, assume an example in which the effective region of the filter array 10 and the effective region of the image sensor 50 have the same size in the X direction and the Y direction. In this specification, the "effective region of the filter array 10" means a region of the filter array 10 in which the transmission spectrum has local maxima in at least two wavelength bands among the wavelength bands W1 to WN. The "effective region of the image sensor 50" means a region of the image sensor 50 in which signals for obtaining the separated images 220 are extracted. When the image sensor 50 extracts the signals for obtaining the separated images 220 from some of the pixels 50a, the region in which these pixels 50a are arranged is the effective region of the image sensor 50.

In the above-described structure, when the filter array 10 is misaligned from the image sensor 50, the effective region of the image sensor 50 and the effective region of the filter array 10 do not overlap in a certain region when viewed in the Z direction, that is, in plan view. In such a region, the image sensor 50 cannot detect the light transmitted through the filter array 10.

Accordingly, unlike the example illustrated in Fig. 9, assume that the reconstruction error is calculated under a condition described below. The condition is that the effective region of the image sensor 50 is within the outer edge of the effective region of the filter array 10 in plan view. In other words, the effective region of the filter array 10 includes a first portion that overlaps the entirety of the effective region of the image sensor 50 and a second portion that does not overlap the effective region of the image sensor 50 in plan view. In one example, the first portion is a central region, and the second portion is a peripheral region surrounding the central region. When the above-described condition is satisfied, the image sensor 50 can detect the light transmitted through the filter array 10 over the entirety of the effective region thereof.

As illustrated in Fig. 10, the reconstruction error is at a minimum when the misalignment is 0 or 1, and at a maximum when the misalignment is 0.5. The maximum reconstruction error is about 2.5 times the minimum reconstruction error. The inventor has confirmed that when the separated images 220 with a reconstruction error of over 100 are compared with the correct images, the degradation of the separated images 220 is visually noticeable. When the reconstruction error is calculated, the misalignment is considered to be the cause of an increase in the reconstruction error. However, in practice, fluctuations in the dark current in the pixels 50a, for example, also cause an increase in the reconstruction error. Therefore, when the misalignment is 0.5, there is a possibility that the MSE will exceed 100 and the separated images 220 will be degraded in actual use. As described above, the pixel pitch may be, for example, greater than or equal to 1 $\mu$m and less than or equal to 10 $\mu$m. Even when the pixel pitch is set to 10 $\mu$m to reduce the influence of misalignment, one-half of the pixel pitch is 5 $\mu$m. When the filter array 10 and the image sensor 50 are bonded together, realistic industrial tolerances are about 5 $\mu$m. In other words, in practice, a misalignment of about 5 $\mu$m may occur.

When the filter pitch is equal to the pixel pitch, the reconstruction error can be minimized and the separated images 220 can be accurately reconstructed if the filters 100 completely coincide with the pixels 50a as designed. However, even a misalignment as small as several micrometers may cause a large reconstruction error and lead to the degradation of the separated images. The inventor has found such a problem and arrived at a light detection device capable of solving the problem.

<Structure and Arrangement of Filter Array and Image Sensor in Present Embodiment>

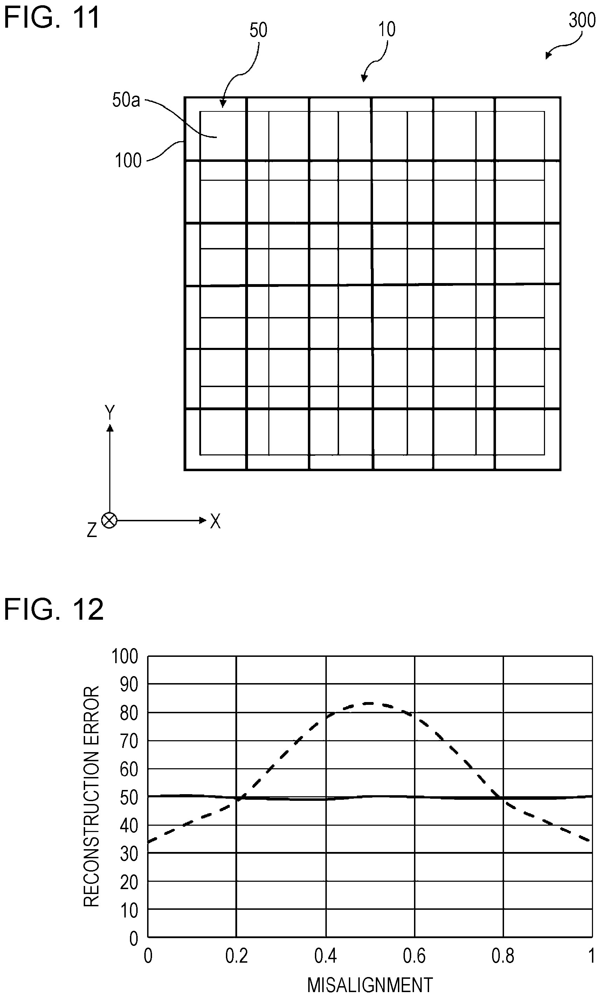

The structure and arrangement of the filter array 10 and the image sensor 50 in the light detection device 300 according to the present embodiment will now be described with reference to Figs. 11 to 15. According to the light detection device 300 of the present embodiment, even when the filter array 10 and the image sensor 50 are misaligned, the reconstruction error can be sufficiently reduced, and the separated images 220 can be accurately reconstructed. As a result, the light detection device 300 with high productivity and good imaging characteristics can be obtained.

Fig. 11 is a schematic plan view of an example of the light detection device 300 according to the present embodiment. As illustrated in Fig. 11, the effective region of the filter array 10 is larger than the effective region of the image sensor 50, and the effective region of the filter array 10 includes a first portion that overlaps the entirety of the effective region of the image sensor 50 and a second portion that does not overlap the effective region of the image sensor 50 in plan view.

The size of the effective region of the filter array 10 is greater than the size of the effective region of the image sensor 50 in each of the X direction and the Y direction. Considering the tolerances in the process of bonding the filter array 10 and the image sensor 50 together, the size of the effective region of the filter array 10 may be greater than the size of the effective region of the image sensor 50 by, for example, greater than or equal to 10 μm in each of the X direction and the Y direction. Alternatively, the size of the effective region of the filter array 10 may be greater than the size of the effective region of the image sensor 50 by, for example, greater than or equal to twice the filter pitch in each of the X direction and the Y direction.

According to the above-described structure, when the filter array 10 and the image sensor 50 are bonded together such that the center of the effective region of the filter array 10 coincides with the center of the effective region of the image sensor 50, the misalignment does not cause any problem. This is because even when a misalignment of less than or equal to 5 μm or less than or equal to the filter pitch occurs in the ±X direction and/or the ±Y direction, the effective region of the filter array 10 includes the first portion that overlaps the entirety of the effective region of the image sensor 50 in plan view. As a result, the image sensor 50 can detect the light transmitted through the filter array 10 over the entirety of the effective region thereof. Although not illustrated in Fig. 11, a light-detecting element for checking the quality may be provided outside the effective region of the image sensor 50.

In the example illustrated in Fig. 11, the filters 100 and the pixels 50a have square shapes. The size of the filters 100 is less than the size of the pixels 50a. The filter pitch is less than the pixel pitch and is 0.9 times the pixel pitch in each of the X direction and the Y direction.

Fig. 12 illustrates the relationship between the misalignment between the filter array 10 and the image sensor 50 and the reconstruction error of the separated images 220 according to the present embodiment. The solid line shows the present embodiment, and the dashed line shows the above-described comparative example. The filter array 10 is misaligned by the same distance in the X direction and the Y direction. The horizontal and vertical axes of Fig. 12 are respectively the same as the horizontal and vertical axes of Fig. 10. However, 0 and 1 on the horizontal axis of Fig. 12 mean that the center of a certain one of the filters 100 completely coincides with the center of a certain one of the pixels 50a.

As illustrated in Fig. 12, in the present embodiment, unlike the comparative example, even when there is a misalignment between the filter array 10 and the image sensor 50, the reconstruction error is substantially constant and hardly dependent on the misalignment. Accordingly, the separated images 220 can be more accurately and reliably reconstructed. All industrial products that are manufactured and sold need to meet the required performance standards. Products that fail to meet the required performance standards due to differences in the manufacturing process cannot be shipped, and therefore cause an increase in the manufacturing cost. This can, of course, be avoided by designing the products accordingly. In the comparative example, when the misalignment between the filter array 10 and the image sensor 50 is 0.5, the reconstruction error is at a maximum, and the MSE exceeds 80. In actual use, the MSE exceeds 100. Therefore, the performance of the light detection device 310 as an industrial product cannot be considered high. In contrast, according to the present embodiment, even when the filter array 10 and the image sensor 50 are misaligned, the reconstruction error is substantially constant and hardly dependent on the misalignment, and the MSE is about 50. In actual use, the MSE does not exceed 100. Therefore, the performance of the light detection device 300 as an industrial product can be considered high.

When the products with the MSE that does not exceed 100 in actual use among the manufactured products are shipped, the products according to the comparative example are highly likely to include non-shippable products. In contrast, the products according to the present embodiment are less likely to include non-shippable products. Therefore, according to the present embodiment, the yield can be higher than that in the comparative example, and the manufacturing cost can be reduced. In addition, according to the present embodiment, since the MSE is hardly dependent on the misalignment, the reliability of the products can be increased.

The reason why the structure in which the filter pitch is shorter than the pixel pitch enables a more accurate reconstruction of the separated images 220 will now be discussed. In this structure, even when there is a misalignment, the centers of the filters 100 coincide with or are close to the centers of the pixels 50a at some locations. Therefore, the designed performance or the performance close to the designed performance can be obtained, and an increase in the reconstruction error can be suppressed. In the example illustrated in Fig. 11, at the four corners, the centers of the filters 100 are close to the centers of the pixels 50a, and a major portion of the transmission spectrum of light detected by one pixel 50a is determined by one filter 100. As a result, the high randomness of the filter array 10 can be sufficiently reflected, and the separated images 220 can be accurately reconstructed.

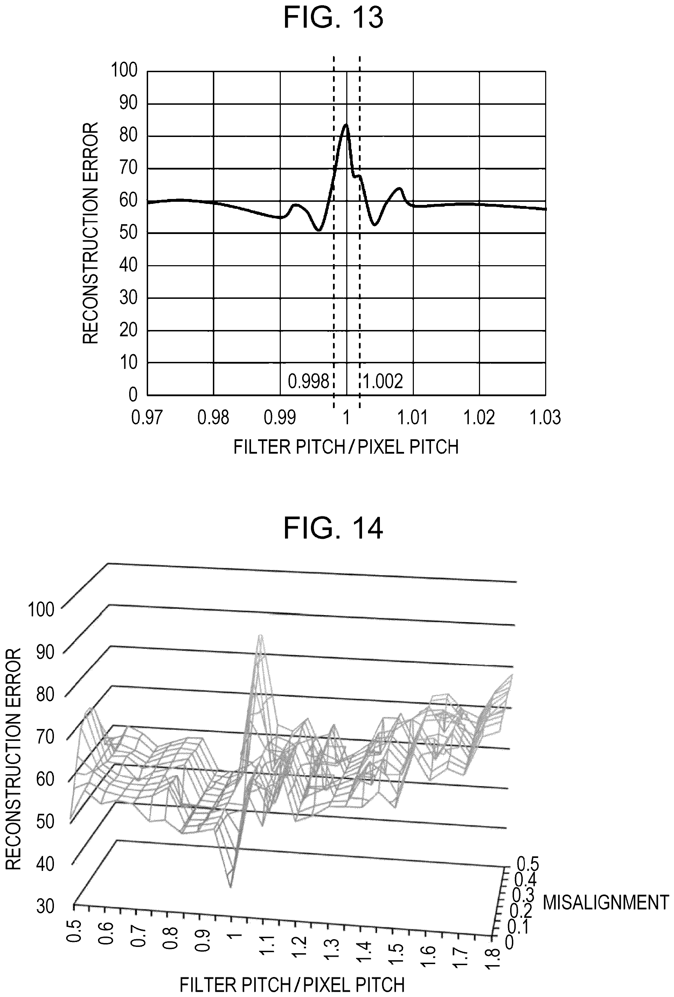

The above discussion suggests that, also when the filter pitch is longer than the pixel pitch, the high randomness of the filter array 10 can be sufficiently reflected, and the separated images 220 can be more accurately reconstructed. The relationship between the ratio of the filter pitch to the pixel pitch and the reconstruction error will now be described with reference to Fig. 13. Fig. 13 illustrates the relationship between the ratio of the filter pitch to the pixel pitch and the reconstruction error of the separated images 220 according to the present embodiment when the misalignment is 0.5. The horizontal axis of Fig. 13 represents the ratio of the filter pitch to the pixel pitch. The vertical axis of Fig. 13 represents the reconstruction error. As an example of the misalignment, it is assumed that the misalignment is 0.5, at which the reconstruction error of the separated images 220 is at a maximum when the ratio of the filter pitch to the pixel pitch is 1.

As illustrated in Fig. 13, the reconstruction error of the separated images 220 significantly increases when the ratio of the filter pitch to the pixel pitch is greater than 0.998 and less than 1.002, that is, when the ratio is in the range of 1 ±0.002. When the ratio of the filter pitch to the pixel pitch is greater than 0.99 and less than 1.01, that is, when the ratio is in the range of 1±0.01, the reconstruction error of the separated images 220 greatly depends on the misalignment and is unstable. In such a case, the reconstruction error may increase unexpectedly due to the aberrations of the optical system 40 illustrated in Fig. 1 depending on the imaging conditions.

Therefore, to reduce the reconstruction error of the separated images 220, the ratio of the filter pitch to the pixel pitch is preferably less than or equal to 0.998 or greater than or equal to 1.002. In addition, to stabilize the reconstruction error of the separated images 220, the ratio of the filter pitch to the pixel pitch is more preferably less than or equal to 0.99 or greater than or equal to 1.01.

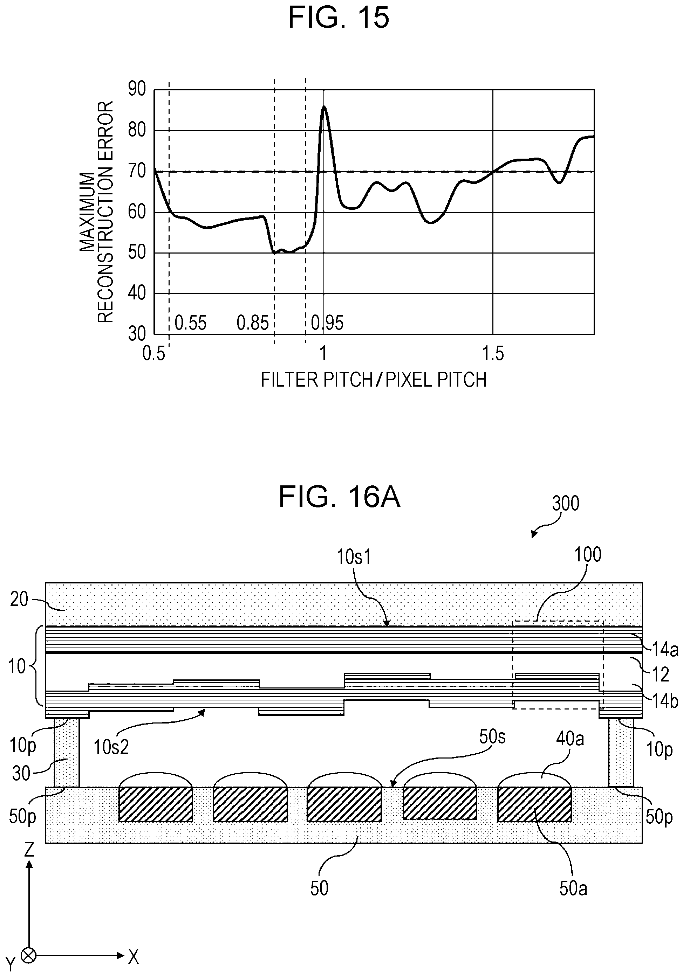

The relationship between the ratio of the filter pitch to the pixel pitch, the misalignment, and the reconstruction error of the separated images 220 will now be described with reference to Figs. 14 and 15. Fig. 14 illustrates the relationship between the ratio of the filter pitch to the pixel pitch, the misalignment, and the reconstruction error of the separated images 220 according to the present embodiment. The horizontal axis of Fig. 14 represents the ratio of the filter pitch to the pixel pitch. The axis in the depth direction of Fig. 14 represents the above-described misalignment. The vertical axis of Fig. 14 represents the difference in the reconstruction error. The misalignment is in the range of greater than or equal to 0.0 and less than or equal to 0.5, and the range of greater than or equal to 0.5 and less than or equal to 1.0 is not taken into consideration. This is because the reconstruction error of the separated images 220 for the misalignment in the range of greater than or equal to 0.5 and less than or equal to 1.0 and the reconstruction error of the separated images 220 for the misalignment in the range of greater than or equal to 0.0 and less than or equal to 0.5 are symmetric to each other.

Fig. 15 illustrates the relationship between the ratio of the filter pitch to the pixel pitch and the maximum reconstruction error of the separated images 220 according to the present embodiment. The maximum reconstruction error of the separated images 220 is the maximum value of the reconstruction error of the separated images 220 at a certain misalignment in Fig. 14 when the ratio of the filter pitch to the pixel pitch is fixed.

The result illustrated in Fig. 15 suggests (1) to (4) described below.

(1) When the ratio of the filter pitch to the pixel pitch is less or greater than 1, the reconstruction error of the separated images 220 can be reduced. When the ratio is less than 1, the reconstruction error can be further reduced than when the ratio is greater than 1.
(2) When the ratio of the filter pitch to the pixel pitch is less than or equal to 1.5, a significant increase in the reconstruction error of the separated images 220 can be suppressed.
(3) When the ratio of the filter pitch to the pixel pitch is greater than or equal to 0.55, a significant increase in the reconstruction error of the separated images 220 can be suppressed.
(4) When the ratio of the filter pitch to the pixel pitch is greater than or equal to 0.85 and less than or equal to 0.95, the reconstruction error of the separated images 220 is particularly low and is stable.

As described above, the ratio of the filter pitch to the pixel pitch is preferably less than or equal to 0.998 or greater than or equal to 1.002, and more preferably less than or equal to 0.99 or greater than or equal to 1.01. In addition, the above-described (1) to (4) show that the ratio of the filter pitch to the pixel pitch is more preferably less than or equal to 1.5, still more preferably greater than or equal to 0.55, and still more preferably greater than or equal to 0.85 and less than or equal to 0.95.

In the above-described example, the filter pitch in the X direction and the filter pitch in the Y direction are equal to each other, and the pixel pitch in the X direction and the pixel pitch in the Y direction are equal to each other. The filter pitch in the X direction and the filter pitch in the Y direction may differ from each other, and the pixel pitch in the X direction and the pixel pitch in the Y direction may differ from each other.

When ratio of the filter pitch to the pixel pitch is designed in the above-described range in at least one of the X direction and the Y direction, the separated images 220 can be more accurately reconstructed, and the performance of the light detection device 300 as an industrial product can be improved. When the ratio is designed in the above-described range in both the X direction and the Y direction, the performance of the detection device 300 as an industrial product can be further improved.

The phrase "designed in the above-described range in at least one of the X direction and the Y direction" may be interpreted as (a) designed in the above-described range in the X direction, (b) designed in the above-described range in the Y direction, or (c) designed in the above-described range in the X direction and designed in the above-described range in the Y direction".

As described above, according to the light detection device 300 of the present embodiment, even when the filter array 10 and the image sensor 50 are misaligned, the reconstruction error of the separated images 220 is not significantly increased, and the separated images 220 can be more accurately reconstructed. As a result, the light detection device 300 with high productivity and good imaging characteristics can be obtained.

The conditions to be satisfied by the light detection device 300 according to the present embodiment can be generalized as follows. The filters 100 included in the filter array 10 are arranged in a matrix pattern along a first direction and a second direction crossing each other. The pixels 50a included in the image sensor 50 are arranged in a matrix pattern along a third direction and a fourth direction crossing each other. The first direction and the second direction may or may not be orthogonal to each other. The third direction and the fourth direction may or may not be orthogonal to each other. For example, in a square grid pattern, two alignment directions are orthogonal to each other. In a triangular grid pattern, two alignment directions cross each other at 60°. The filters 100 may be arranged in a square grid pattern while the pixels 50a are similarly arranged in a square grid pattern. A triangular grid pattern may be employed instead of the square grid pattern. Alternatively, the filters 100 may be arranged in a square grid pattern while the pixels 50a are arranged in a triangular grid pattern. The relationship between the square grid pattern and the triangular grid pattern may be reversed.

The first direction and the third direction may be the same direction or different directions. The second direction and the fourth direction may be the same direction or different directions. The angle between the third direction and the first direction may be, for example, greater than or equal to 0° and less than or equal to 45°, and the angle between the fourth direction and the second direction may be, for example, greater than or equal to 0° and less than or equal to 45°. The upper limit of the angles may be 22.5°, which is one-half of 45°, instead of 45°.

When the first direction and the third direction are different from each other, the third direction may be a direction obtained by rotating the first direction clockwise or counterclockwise in plan view. When the fourth direction and the second direction are different from each other, the fourth direction may be a direction obtained by rotating the second direction clockwise or counterclockwise in plan view. When the angle between the third direction and the first direction is greater than or equal to 0° and less than or equal to 10°, these directions may be regarded as being substantially the same direction. Similarly, when the angle between the fourth direction and the second direction is greater than or equal to 0° and less than or equal to 10°, these directions may be regarded as being substantially the same direction.

The filter pitch in the first direction may or may not be constant. When the filter pitch in the first direction is not constant, the filter pitch in the first direction in the example illustrated in Figs. 13 to 15 is the average of filter pitches in the first direction. The average of the filter pitches in the first direction may be calculated based on the pitches of all of the filters in the first direction. Alternatively, the average of the filter pitches in the first direction may be calculated based on the pitches of some of the filters in the first direction.

The filter pitch in the second direction may or may not be constant. When the filter pitch in the second direction is not constant, the filter pitch in the second direction in the example illustrated in Figs. 13 to 15 is the average of filter pitches in the second direction. The average of the filter pitches in the second direction may be calculated based on the pitches of all of the filters in the second direction. Alternatively, the average of the filter pitches in the second direction may be calculated based on the pitches of some of the filters in the second direction.

The pixel pitch in the third direction may or may not be constant. When the pixel pitch in the third direction is not constant, the pixel pitch in the third direction in the example illustrated in Figs. 13 to 15 is the average of pixel pitches in the third direction. The average of the pixel pitches in the third direction may be calculated based on the pitches of all of the pixels in the third direction. Alternatively, the average of the pixel pitches in the third direction may be calculated based on the pitches of some of the pixels in the third direction.

The pixel pitch in the fourth direction may or may not be constant. When the pixel pitch in the fourth direction is not constant, the pixel pitch in the fourth direction in the example illustrated in Figs. 13 to 15 is the average of pixel pitches in the fourth direction. The average of the pixel pitches in the fourth direction may be calculated based on the pitches of all of the pixels in the fourth direction. Alternatively, the average of the pixel pitches in the fourth direction may be calculated based on the pitches of some of the pixels in the fourth direction.

In the example illustrated in Figs. 11 to 15, the first direction and the third direction are the same, and are both the X direction. The second direction and the fourth direction are the same, and are both the Y direction. The first direction and the second direction are orthogonal to each other, and the third direction and the fourth direction are orthogonal to each other. The filter pitch in each of the first direction and the second direction is constant, and the pixel pitch in each of the third direction and the fourth direction is constant.

Assume that Rp1 is the quotient obtained by dividing the filter pitch in the first direction by the pixel pitch in the third direction and that Rp2 is the quotient obtained by dividing the filter pitch in the second direction by the pixel pitch in the fourth direction. At least one of Rp1 and Rp2 differs from 1. Rp1 and Rp2 may both differ from 1. Rp1 and Rp2 may be equal to each other or differ from each other. When Rp1 and Rp2 are equal to each other, the filter array 10 can be easily designed.

The phrase "at least one of Rp1 and Rp2 differs from 1" may be interpreted as (a) Rp1 ≠ 1, (b) Rp2 ≠ 1, or (c) Rp1 ≠ 1 and Rp2 ≠ 1.

At least one of Rp1 and Rp2 is preferably less than or equal to 0.998 or greater than or equal to 1.002, more preferably less than or equal to 0.99 or greater than or equal to 1.01. In addition, at least one of Rp1 and Rp2 is more preferably less than or equal to 1.5, still more preferably greater than or equal to 0.55, and still more preferably greater than or equal to 0.85 and less than or equal to 0.95.

The phrase "at least one of Rp1 and Rp2 is less than or equal to 0.998 or greater than or equal to 1.002" may be interpreted as (a) Rp1 ≤ 0.998 or 1.002 ≤ Rp1, (b) Rp2 ≤ 0.998 or 1.002 ≤ Rp2, or (c) "Rp1 ≤ 0.998 or 1.002 ≤ Rp1" and "Rp2 ≤ 0.998 or 1.002 ≤ Rp2".

The phrase "at least one of Rp1 and Rp2 is less than or equal to 0.99 or greater than or equal to 1.01" may be interpreted as (a) Rp1 ≤ 0.99 or 1.01 ≤ Rp1, (b) Rp2 ≤ 0.99 or 1.01 ≤ Rp2, or (c) "Rp1 ≤ 0.99 or 1.01 ≤ Rp1" and "Rp2 ≤ 0.99 or 1.01 ≤ Rp2".

The phrase "at least one of Rp1 and Rp2 is less than or equal to 1.5" may be interpreted as (a) Rp1 ≤ 1.5, (b) Rp2 ≤ 1.5, or (c) Rp1 ≤ 1.5 and Rp2 ≤ 1.5".

The phrase "at least one of Rp1 and Rp2 is greater than or equal to 0.55" may be interpreted as (a) 0.55 ≤ Rp1, (b) 0.55 ≤ Rp2, or (c) 0.55 ≤ Rp1 and 0.55 ≤ Rp2.

The phrase "at least one of Rp1 and Rp2 is greater than or equal to 0.85 and less than or equal to 0.95" may be interpreted as (a) 0.85 ≤ Rp1 ≤ 0.95, (b) 0.85 ≤ Rp2 ≤ 0.95, or (c) 0.85 ≤ Rp1 ≤ 0.95 and 0.85 ≤ Rp2 ≤ 0.95.

The effective region of the filter array 10 includes the first portion that overlaps the entirety of the effective region of the image sensor 50 and the second portion that does not overlap the effective region of the image sensor 50 in plan view. The size of the effective region of the filter array 10 in the first direction is greater than the size of the effective region of the image sensor 50 in the third direction. The size of the effective region of the filter array 10 in the second direction is greater than the size of the effective region of the image sensor 50 in the fourth direction.

More specifically, the size of the effective region of the filter array 10 in the first direction exceeds the size of the effective region of the image sensor 50 in the third direction by, for example, greater than or equal to 10 μm. The size of the effective region of the filter array 10 in the second direction exceeds the size of the effective region of the image sensor 50 in the fourth direction by, for example, greater than or equal to 10 μm.

Alternatively, the size of the effective region of the filter array 10 in the first direction exceeds the size of the effective region of the image sensor 50 in the third direction by, for example, greater than or equal to twice the filter pitch in the first direction. The size of the effective region of the filter array 10 in the second direction exceeds the size of the effective region of the image sensor 50 in the fourth direction by, for example, greater than or equal to twice the filter pitch in the second direction.

In the light detection device 300 that utilizes compressed sensing, the above-described ranges of Rp1 and Rp2 can be discussed only by focusing on the manufacturing tolerances of the misalignment between the filter array 10 and the image sensor 50. In addition, the above-described ranges of Rp1 and Rp2 can be determined only by the calculations described with reference to Figs. 12 to 15. PTLs 6 to 9 disclose structures in which the wavelength filters and pixels have different sizes. However, in these structures, unlike compressed sensing, a signal of a single color is extracted from each pixel of an image sensor to produce an RBG image. In these structures, the misalignment between the filter array and the image sensor is not taken into consideration.

<Fixation of Arrangement of Filter Array and Image Sensor>

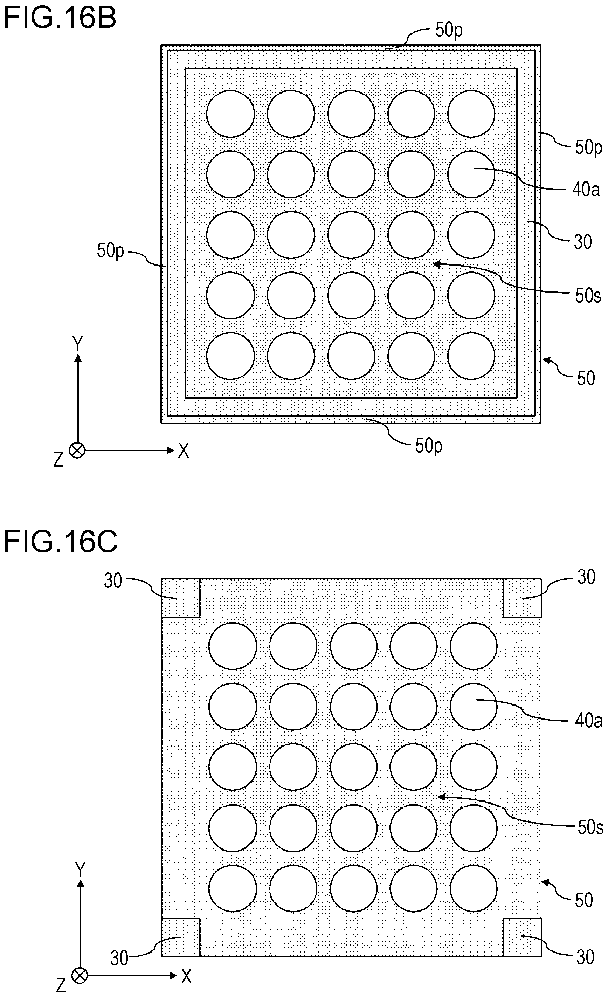

An example of the structure in which the filter array 10 and the image sensor 50 are bonded together will now be described with reference to Figs. 16A to 16D. Fig. 16A is a schematic sectional view illustrating another example of the light detection device 300. Fig. 16B is a plan view of the light detection device 300 illustrated in Fig. 16A from which the filter array 10 and the substrate 20 are removed. In the example illustrated in Fig. 16A, the filter array 10 includes a peripheral region 10p positioned around the light-emitting surface 10s2, and the image sensor 50 includes a peripheral region 50p positioned around the light detection surface 50s. The peripheral region 10p of the filter array 10 and the peripheral region 50p of the image sensor 50 are flat. In the example illustrated in Fig. 16A, the light detection device 300 includes double-sided tape 30 with which the peripheral region 10p of the filter array 10 and the peripheral region 50p of the image sensor 50 are bonded together. The double-sided tape 30 is shaped to extend in a direction perpendicular to the light detection surface 50s, as illustrated in Fig. 16A, and surround the space between the light-emitting surface 10s2 and the light detection surface 50s, as illustrated in Fig. 16B. The double-sided tape 30 defines the distance between the light-emitting surface of each filter 100 and the light detection surface 50s. The height of the double-sided tape 30 may be designed so that the distance between the light-emitting surface 10s2 and the light detection surface 50s satisfies the above-described minimum distance. When the double-sided tape 30 is provided to fix the arrangement of the filter array 10 and the image sensor 50, the light detection device 300 can be manufactured at low cost by simple steps.

Fig. 16C is a schematic plan view illustrating another example of the arrangement of the double-sided tape 30 illustrated in Fig. 16B. In the example illustrated in Fig. 16C, the four corners of the peripheral region 10p of the filter array 10 are bonded to the four corners of the peripheral region 50p of the image sensor 50 with pieces of the double-sided tape 30. In the present embodiment, at least a portion of the peripheral region 10p of the filter array 10 and at least a portion of the peripheral region 50p of the image sensor 50 are bonded together with the double-sided tape 30. As a result, the arrangement of the filter array 10 and the image sensor 50 can be fixed.

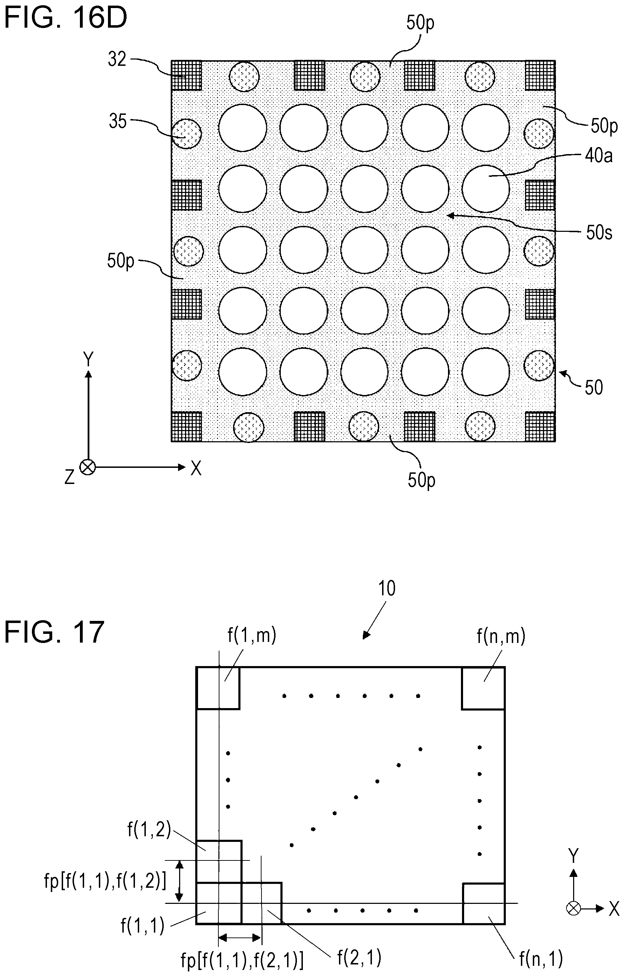

Fig. 16D is a schematic plan view illustrating an example in which spacers 32 and adhesive parts 35 are arranged in place of the pieces of the double-sided tape 30 illustrated in Fig. 16B. The light detection device 300 further includes the spacers 32 disposed between the peripheral region 10p of the filter array 10 and the peripheral region 50p of the image sensor 50. At least a portion of the peripheral region 10p of the filter array 10 and at least a portion of the peripheral region 50p of the image sensor 50 are bonded together by the adhesive parts 35. The adhesive parts 35 arranged in the peripheral region 50p may be non-transparent. This is because the peripheral region 50p does not contribute to detecting light. When viewed in the direction normal to the light incident surface 10s1, the adhesive parts 35 and the spacers 32 may be arranged so as not to overlap. In such a structure, the distance between the light-emitting surface 10s2 of the filter array 10 and the light detection surface 50s of the image sensor 50 can be accurately set, and the filter array 10 and the image sensor 50 can be bonded together while being further parallel to each other. Since the light detection surface 50s has no spacers 32 and no transparent adhesive parts 34 arranged thereon, attenuation of light by the spacers 32 and transparent adhesive parts 34 does not occur.

In the example illustrated in Fig. 16D, the spacers 32 and the adhesive parts 35 are alternately arranged in the peripheral region 50p of the image sensor 50. The spacers 32 and the adhesive parts 35 need not be alternately arranged. Two or more spacers 32 may be successively arranged, and two or more adhesive parts 35 may be successively arranged. Alternatively, four spacers 32 may be disposed at the four corners of the peripheral region 50p of the image sensor 50 while the adhesive parts 35 are arranged in the other areas. Although the spacers 32 have a rectangular shape in cross-section in the example illustrated in Fig. 16D, the spacers 32 may have a circular shape in cross-section. Although the adhesive parts 35 have a circular shape, the adhesive parts 35 may have an elliptical shape. In the case where it is not necessary to accurately set the distance between the light-emitting surface 10s2 and the light detection surface 50s, the adhesive parts 35 and the spacers 32 may overlap when viewed in a direction normal to the light incident surface 10s1.

Some or all of the above-described examples of the light detection device 300 may be combined in any way depending on the purpose or application. For example, the antireflection film 22 illustrated in Fig. 8 may be applied to the structure illustrated in Fig. 16A.

(Another Example 1)

In the present disclosure, "at least one of A and B" may mean "(A), (B), or (A and B)".

(Another Example 2)

The above-described embodiment may be modified as follows.

A light detection device comprising:

a filter array including filters; and
an image sensor including pixels, the image sensor detecting light from the filter array,
wherein the filters include a first filter and a second filter,
wherein a transmission spectrum of the first filter has first local maxima,
wherein a transmission spectrum of the second filter has second local maxima,
wherein wavelength values corresponding to the first local maxima differ from wavelength values corresponding to the second local maxima,
wherein the filters are arranged in a matrix pattern along a first direction and a second direction crossing each other,
wherein the pixels are arranged in a matrix pattern along a third direction and a fourth direction crossing each other,
wherein an angle between the third direction and the first direction is greater than or equal to 0° and less than or equal to 45°,
wherein an angle between the fourth direction and the second direction is greater than or equal to 0° and less than or equal to 45°,
wherein (a) Rp1 ≠ 1, (b) Rp2 ≠ 1, or (c) the Rp1 ≠ 1 and the Rp2 ≠ 1,
wherein the Rp1 = (first filter distance of the filter array in the first direction)/(first pixel distance of the image sensor in the third direction),
wherein the Rp2 = (second filter distance of the filter array in the second direction)/(second pixel distance of the image sensor in the fourth direction),
wherein the first filter distance in the first direction is determined based on a center-to-center distance between two first filters included in the filters and arranged in the first direction, the two first filters being adjacent to each other, wherein the second filter distance in the second direction is determined based on a center-to-center distance between two second filters included in the filters and arranged in the second direction, the two second filters being adjacent to each other,

wherein the first pixel distance in the third direction is determined based on a center-to-center distance between two first pixels included in the pixels and arranged in the third direction, the two first pixels being adjacent to each other, and wherein the second pixel distance in the fourth direction is determined based on a center-to-center distance between two second pixels included in the pixels and arranged in the fourth direction, the two second pixels being adjacent to each other.

In the above-described embodiment, Rp1 and Rp2 may be as follows.
Rp1 = (first filter distance of the filter array 10 in the first direction) /(first pixel distance of the image sensor 50 in the third direction)
Rp2 = (second filter distance of the filter array 10 in the second direction)/(second pixel distance of the image sensor 50 in the fourth direction)

An example of the first filter distance of the filter array 10 in the first direction and an example of the second filter distance of the filter array 10 in the second direction will now be described.
Fig. 17 illustrates the example of the first filter distance of the filter array 10 in the first direction and the example of the second filter distance of the filter array 10 in the second direction.
The filter array 10 includes filters. The filters include a filter f(1,1), ..., and a filter f(n,m). The filters are arranged in a matrix pattern along a first direction (= X direction) and a second direction (= Y direction) crossing each other.
In Fig. 17, a filter distance between the filter f(1,1) and the filter f(1,2) is represented by fp[f(1,1),f(1,2)]. Here, fp[f(1,1),f(1,2)] is the distance between the center of the filter f(1,1) and the center of the filter f(1,2) on the XY plane.
In Fig. 17, a filter distance between the filter f(1,1) and the filter f(2,1) is represented by fp[f(1,1),f(2,1)]. Here, fp[f(1,1),f(2,1)] is the distance between the center of the filter f(1,1) and the center of the filter f(2,1) on the XY plane.
The filters are arranged in a matrix pattern along the first direction (= X direction) and the second direction (= Y direction) crossing each other. Therefore, the following expressions may be satisfied:

fp[f(1,1),f(1,2)] = fp[f(2,1),f(2,2)] = ... = fp[f(n,1),f(n,2)] ≡ fp(second direction, 1), ...,

fp[f(1,m-1),f(1,m)] = fp[f(2,m-1),f(2,m)] = ... = fp[f(n,m-1),f(n,m)] ≡ fp(second direction, m-1), fp[f(1,1),f(2,1)] = fp[f(1,2),f(2,2)] = ... = fp[f(1,m),f(2,m)] ≡ fp(first direction, 1), ...,

fp[f(n-1,1),f(n,1)] = fp[f(n-1,2),f(n,2)] = ... = fp[f(n-1,m),f(n,m)] ≡ fp(first direction, n-1).

The first filter distance of the filter array 10 in the first direction may be determined based on at least one selected from the group consisting of fp(first direction, 1), ..., and fp(first direction, n-1). The first filter distance of the filter array 10 in the first direction may be (fp(first direction, 1) + ... + fp(first direction, n-1))/(n-1). The expression fp(first direction, 1) = ... = fp(first direction, n-1) may be satisfied.
The second filter distance of the filter array 10 in the second direction may be determined based on at least one selected from the group consisting of fp(second direction, 1), ..., and fp(second direction, m-1). The second filter distance of the filter array 10 in the second direction may be (fp(second direction, 1) + ... + fp(second direction, m-1))/(m-1). The expression fp(second direction, 1) = ... = fp(second direction, m-1) may be satisfied.
An example of the first pixel distance of the image sensor 50 in the third direction and an example of the second pixel distance of the image sensor 50 in the fourth direction will now be described.

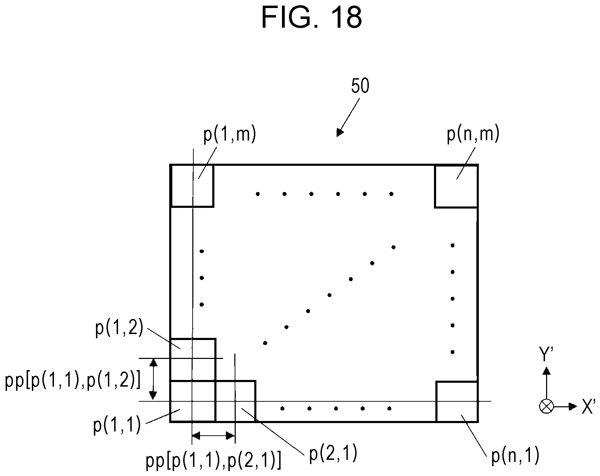

Fig. 18 illustrates the example of the first pixel distance of the image sensor 50 in the third direction and the example of the second pixel distance of the image sensor 50 in the fourth direction.
The image sensor 50 includes pixels. The pixels include a pixel p(1,1), ..., and a pixel p(n,m). The pixels are arranged in a matrix pattern along a third direction (= X' direction) and a fourth direction (= Y' direction) crossing each other.
In Fig. 18, a pixel distance between the pixel p(1,1) and the pixel p(1,2) is represented by pp[p(1,1),p(1,2)]. Here, pp[p(1,1),p(1,2)] is the distance between the center of the pixel p(1,1) and the center of the pixel p(1,2) on the X'Y' plane.

In Fig. 18 a pixel distance between the pixel p(1,1) and the pixel p(2,1) is represented by pp[p(1,1),p(2,1)]. Here, pp[p(1,1),p(2,1)] is the distance between the center of the pixel p(1,1) and the center of the pixel pp(2,1) on the X'Y' plane.

The pixels are arranged in a matrix pattern along the third direction (= X' direction) and the fourth direction (= Y' direction) crossing each other. Therefore, the following expressions may be satisfied:

pp[p(1,1),p(1,2)] = pp[f(2,1),f(2,2)] = ... = pp[p(n,1),p(n,2)] ≡ pp(fourth direction, 1), ...,

pp[p(1,m-1),p(1,m)] = pp[f(2,m-1),p(2,m)] = ... = pp[p(n,m-1),p(n,m)] ≡ pp(fourth direction, m-1), pp[p(1,1),p(2,1)] = pp[p(1,2),p(2,2)] = ... = ppp[p(1,m),p(2,m)] ≡ pp(third direction, 1), ...,

pp[p(n-1,1),p(n,1)] = pp[p(n-1,2),p(n,2)] = ... = pp[p(n-1,m),p(n,m)] ≡ pp(third direction, n-1).

The first pixel distance of the image sensor 50 in the third direction may be determined based on at least one selected from the group consisting of pp(third direction, 1), ..., and pp(third direction, n-1). The first pixel distance of the image sensor 50 in the third direction may be (pp(third direction, 1) + ... + pp(third direction, n-1))/(n-1). The expression pp(third direction, 1) = ... = pp(third direction, n-1) may be satisfied.

The second pixel distance of the image sensor 50 in the fourth direction may be determined based on at least one selected from the group consisting of pp(fourth direction, 1), ..., and pp(fourth direction, m-1). The second pixel distance of the image sensor 50 in the fourth direction may be (pp(fourth direction, 1) + ... + pp(fourth direction, m-1))/(m-1). The expression pp(fourth direction, 1) = ... = pp(fourth direction, m-1) may be satisfied.

In the above description, the number of filters is n × m, and the number of pixels is n × m. However, the number of filters and the number of matrix elements may be different or the same.

Industrial Applicability

The light detection device and the filter array according to the present disclosure are useful in, for example, cameras and measurement devices that acquire multi-wavelength two-dimensional images. The light detection device and the filter array according to the present disclosure are also applicable to, for example, biological, medical, and cosmetic sensing, systems for inspecting food for foreign matter and agrochemical residues, remote sensing systems, and on-board sensing systems.

Reference Signs List

10 filter array
10s1 light incident surface
10s2 light-emitting surface
10p peripheral region of filter array
12 interference layer
14a first reflection layer
14b second reflection layer
20 substrate
22 antireflection film
30 double-sided tape
32 spacer
35 adhesive
40 optical system
40a microlens
50 image sensor
50s light detection surface
50a light-detecting element
50p peripheral region of image sensor
60 object

100 filter
120 image
200 signal processing circuit
220 separated image
300, 310 light detection device
400 light detection system

**Claims**

1. A light detection device comprising:

   a filter array including filters; and
   an image sensor including pixels, the image sensor detecting light transmitted through the filter array,
   wherein the filters include a first filter and a second filter,
   wherein a first transmission spectrum of the first filter differs from a second transmission spectrum of the second filter,
   wherein the first transmission spectrum has local maxima,
   wherein the second transmission spectrum has local maxima,
   wherein the filters are arranged in a matrix pattern along a first direction and a second direction crossing each other,
   wherein the pixels are arranged in a matrix pattern along a third direction and a fourth direction crossing each other,
   wherein Rp1 is a quotient obtained by dividing a pitch of the filters in the first direction by a pitch of the pixels in the third direction,
   wherein Rp2 is a quotient obtained by dividing a pitch of the filters in the second direction by a pitch of the pixels in the fourth direction, and
   wherein at least one of the Rp1 and the Rp2 differs from 1.

2. The light detection device according to claim 1,
   wherein the Rp1 and the Rp2 both differ from 1.

3. The light detection device according to claim 2,
   wherein the Rp1 and the Rp2 are equal to each other.

4. The light detection device according to any one of claims 1 to 3,
   wherein, in plan view, an effective region of the filter array includes a first portion that overlaps an entirety of an effective region of the image sensor and a second portion that does not overlap the effective region of the image sensor.

5. The light detection device according to claim 4,

   wherein a size of the effective region of the filter array in the first direction exceeds a size of the effective region of the image sensor in the third direction by greater than or equal to 10 $\mu$m, and
   wherein a size of the effective region of the filter array in the second direction exceeds a size of the effective region of the image sensor in the fourth direction by greater than or equal to 10 $\mu$m.

6. The light detection device according to claim 4 or 5,

   wherein a size of the effective region of the filter array in the first direction exceeds a size of the effective region of the image sensor in the third direction by greater than or equal to twice the pitch of the filters in the first direction, and
   wherein a size of the effective region of the filter array in the second direction exceeds a size of the effective region of the image sensor in the fourth direction by greater than or equal to twice the pitch of the filters in the first direction.

7. The light detection device according to any one of claims 1 to 6,
   wherein at least one of the Rp1 and the Rp2 is less than or equal to 0.998 or greater than or equal to 1.002.

8. The light detection device according to claim 7,
wherein at least one of the Rp1 and the Rp2 is less than or equal to 0.99 or greater than or equal to 1.01.

9. The light detection device according to claim 7 or 8,
wherein at least one of the Rp1 and the Rp2 is less than or equal to 1.5.

10. The light detection device according to claim 9,
wherein at least one of the Rp1 and the Rp2 is less than 1.

11. The light detection device according to any one of claims 7 to 10,
wherein at least one of the Rp1 and the Rp2 is greater than or equal to 0.55.

12. The light detection device according to any one of claims 1 to 11,

wherein the filter array includes a light incident surface and an uneven surface positioned opposite to the light incident surface, and
wherein the uneven surface faces a light detection surface of the image sensor.

13. The light detection device according to claim 12,

wherein, when a target wavelength band for imaging is greater than or equal to $\lambda1$ and less than or equal to $\lambda2$, a minimum distance between the uneven surface and the light detection surface is greater than $\lambda2/4$.

14. The light detection device according to claim 12 or 13, further comprising:

spacers disposed between a peripheral region of the filter array and a peripheral region of the image sensor,
wherein at least a portion of the peripheral region of the filter array and at least a portion of the peripheral region of the image sensor are bonded to each other with adhesive parts.

15. A light detection system comprising:

the light detection device according to any one of claims 1 to 14; and
a processing circuit,
wherein the processing circuit reconstructs spectral images corresponding to respective ones of four or more wavelength bands from an image acquired by the image sensor.

16. A filter array for an image sensor including pixels, the filter array comprising:

filters,
wherein the filters include a first filter and a second filter,
wherein a first transmission spectrum of the first filter differs from a second transmission spectrum of the second filter,
wherein the first transmission spectrum has local maxima,
wherein the second transmission spectrum has local maxima,
wherein the filters are arranged in a matrix pattern along a first direction and a second direction crossing each other,
wherein the pixels are arranged in a matrix pattern along a third direction and a fourth direction crossing each other,
wherein Rp1 is a quotient obtained by dividing a pitch of the filters in the first direction by a pitch of the pixels in the third direction,
wherein Rp2 is a quotient obtained by dividing a pitch of the filters in the second direction by a pitch of the pixels in the fourth direction, and
wherein at least one of the Rp1 and the Rp2 differs from 1.

17. A light detection device comprising:

a filter array including filters; and
an image sensor including pixels, the image sensor detecting light transmitted through the filter array,

wherein the filters include first filters and second filters,
wherein each of the first filters has a first transmission spectrum,
wherein each of the second filters has a second transmission spectrum,
wherein the first transmission spectrum differs from the second transmission spectrum,
wherein the first filters are arranged irregularly in the filter array,
wherein the second filters are arranged irregularly in the filter array,
wherein the filters are arranged in a matrix pattern along a first direction and a second direction crossing each other,
wherein the pixels are arranged in a matrix pattern along a third direction and a fourth direction crossing each other,
wherein Rp1 is a quotient obtained by dividing a pitch of the filters in the first direction by a pitch of the pixels in the third direction,
wherein Rp2 is a quotient obtained by dividing a pitch of the filters in the second direction by a pitch of the pixels in the fourth direction, and
wherein at least one of the Rp1 and the Rp2 differs from 1.

18. The light detection device according to claim **1,**
    wherein an angle between the third direction and the first direction is greater than or equal to 0° and less than or equal to 45°, and an angle between the fourth direction and the second direction is greater than or equal to 0° and less than or equal to 45°.

19. The filter array according to claim 16,
    wherein an angle between the third direction and the first direction is greater than or equal to 0° and less than or equal to 45°, and an angle between the fourth direction and the second direction is greater than or equal to 0° and less than or equal to 45°.

20. The light detection device according to claim 17,
    wherein an angle between the third direction and the first direction is greater than or equal to 0° and less than or equal to 45°, and an angle between the fourth direction and the second direction is greater than or equal to 0° and less than or equal to 45°.

## FIG. 1

## FIG. 2A

## FIG. 2B

FIG. 2C

FIG. 2D

FIG. 3A

FIG. 3B

FIG. 4A

FIG. 4B

FIG. 5

# FIG. 6

# FIG. 7

# FIG. 8

# FIG. 9

# FIG. 10

FIG. 11

FIG. 12

# FIG. 13

# FIG. 14

# FIG. 15

# FIG. 16A

FIG.16B

FIG.16C

FIG. 16D

FIG. 17

# FIG. 18

## INTERNATIONAL SEARCH REPORT

| International application No. |
| --- |
| **PCT/JP2023/007415** |

**A. CLASSIFICATION OF SUBJECT MATTER**

***G02B 5/26***(2006.01)i; ***G01J 3/26***(2006.01)i; ***G01J 3/36***(2006.01)i; ***G02B 5/28***(2006.01)i; ***H04N 25/10***(2023.01)i

According to International Patent Classification (IPC) or to both national classification and IPC

**B. FIELDS SEARCHED**

Minimum documentation searched (classification system followed by classification symbols)

G02B5/26; G01J3/26; G01J3/36; G02B5/28; H04N25/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus+JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-80245 A (SONY SEMICONDUCTOR SOLUTIONS CORP.) 23 May 2019 (2019-05-23)<br>paragraph [0007], fig. 1 | 1-20 |
| A | JP 2020-182081 A (YOKOGAWA ELECTRIC CORP.) 05 November 2020 (2020-11-05)<br>paragraph [0030], fig. 3 | 1-20 |
| A | US 2006/0054782 A1 (NEWPORT IMAGING CORP.) 16 March 2006 (2006-03-16)<br>paragraph [0327], fig. 3 | 1-20 |
| A | US 2019/0019829 A1 (NAT ICT AUSTRALIA LTD.) 17 January 2019 (2019-01-17)<br>paragraph [0057], fig. 3 | 1-20 |
| A | WO 2020/061104 A1 (INTUITIVE SURGICAL OPERATIONS, INC.) 26 March 2020 (2020-03-26)<br>paragraphs [0044], [0055], fig. 8 | 1-20 |

☐ Further documents are listed in the continuation of Box C.   ☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 April 2023** | **16 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/007415**

| Patent document cited in search report | | | Publication date (day/month/year) | Patent family member(s) | | | Publication date (day/month/year) |
|---|---|---|---|---|---|---|---|
| JP | 2019-80245 | A | 23 May 2019 | US | 2021/0192685 | A1 | |
| | | | | paragraph [0073], fig. 1 | | | |
| | | | | WO | 2019/082462 | A1 | |
| | | | | EP | 3703363 | A1 | |
| JP | 2020-182081 | A | 05 November 2020 | (Family: none) | | | |
| US | 2006/0054782 | A1 | 16 March 2006 | WO | 2007/005714 | A2 | |
| | | | | CN | 101427372 | A | |
| US | 2019/0019829 | A1 | 17 January 2019 | WO | 2017/120640 | A1 | |
| | | | | AU | 2017207519 | A | |
| WO | 2020/061104 | A1 | 26 March 2020 | JP | 2022-501981 | A | |
| | | | | US | 2021/0360221 | A1 | |
| | | | | EP | 3854075 | A0 | |
| | | | | CN | 112956189 | A | |

Form PCT/ISA/210 (patent family annex) (January 2015)

**REFERENCES CITED IN THE DESCRIPTION**

**Patent documents cited in the description**

- JP 2016156801 A
- US 9466628 B
- JP 2013512445 W
- JP 63151076 A
- JP 59218770 A
- JP 2018529297 W
- JP 56123185 A
- JP 55165562 U
- JP 2010079557 A
- US 9599511 B